# EUROPEAN PATENT SPECIFICATION

(11) **EP 2 136 311 B1**
(45) Date of publication and mention of the grant of the patent: **31.07.2013**
(21) Application number: 08739899.6
(22) Date of filing: 04.04.2008
(51) Int. Cl.: G06F 21/31, H04L 9/32

(54) **DATA KEEPING METHOD, CLIENT APPARATUS, STORAGE DEVICE AND PROGRAM**
DATENHALTEVERFAHREN, CLIENT-GERÄT, SPEICHERVORRICHTUNG UND PROGRAMM
PROCÉDÉ DE CONSERVATION DE DONNÉES, DISPOSITIF CLIENT, DISPOSITIF DE STOCKAGE ET PROGRAMME

(30) Priority: 12.04.2007 JP 2007105373
(43) Date of publication of application: 23.12.2009
(73) Proprietor: NTT Communications Corp., Tokyo 100-8019 (JP)
(72) Inventor: AOKI, Fumio, Tokyo 100-8019 (JP)
(74) Representative: MERH-IP Matias Erny Reichl Hoffmann
(86) International application number: PCT/JP2008/056793
(87) International publication number: WO 2008/132968

(56) References cited:
- EP-A2- 1 372 317
- JP-A- 2003 296 879
- JP-A- 2005 102 055
- JP-A- 2005 174 388
- JP-A- 2005 309 494
- JP-A- 2007 065 782
- US-A1- 2005 069 139
- US-A1- 2007 095 902

## Description

### TECHNICAL FIELD

The present invention relates to data keeping schemes implemented by client apparatuses and storage devices, and more specifically, to a data keeping scheme implemented by a plurality of client apparatuses and a storage device shared by the client apparatuses.

### BACKGROUND ART

In one known data keeping system, a plurality of client apparatuses share a certain storage device (IC chip, for instance), and the client apparatuses manage their own data separately, store the data in the storage device, and read the data from the storage device (refer to Patent literature 1, for instance). That type of system generally takes a preventive measure against fraudulent operations, such as data stored in the storage device by a certain client apparatus being referenced from or overwritten by another client apparatus without permission.

In the system disclosed in Patent literature 1, passwords to be used between the client apparatuses and the storage device are specified in advance for the individual client apparatuses, for example. When the client apparatus attempts to access the data stored in the storage device, password authentication is executed. Each data item stored in the storage device is associated with the password of the client apparatus that has stored the data item. The client apparatus that has passed the password authentication can access just the data associated with the password. One client apparatus usually does not know the password of another client apparatus and cannot access data stored by another client apparatus. Therefore, the above-described fraudulent operations can be prevented.

Passwords having an ordinary length, however, cannot provide a high level of security. Since a human operator inputs the password, a password that is long enough to provide a high level of security leads to inconvenience. Therefore, in situations where a high level of security is demanded, the password authentication is usually not used, and authentication using cryptography is executed instead.
There are two types of authentication using cryptography: an authentication system based on a common key encryption scheme and an authentication system based on a public key encryption scheme. In a general authentication system based on the common key encryption scheme, the client apparatuses and the storage device have a shared common key for the common key encryption scheme (such as Data Encryption Standard (DES)), and challenge-and-response authentication is performed between the apparatuses and the device (challenge-response authentication mechanism (CRAM), for example). In a general authentication system based on the public key encryption scheme, the client apparatuses have a private key for the public key encryption scheme, and the storage device has a public key corresponding to the private key. The client apparatus sends to the storage device a digital signature (RSA signature, for instance) generated with the private key, and the storage device verifies the digital signature with the public key.

Either authentication system can prevent the above-described fraudulent operations by using different keys given to the client apparatuses. Patent literature 1: Japanese Patent Application Laid Open No. 2002-183839

European patent application EP 1 372 317 A2 discloses an authentication system in which a key registration apparatus receives input of an identifier unique to a second device, generates first key data from the identifier according to a predetermined key generation algorithm, and transmits the generated first key data to a first device, which receives and stores the first key data, and authenticates the second device with use of the first key data. The second device stores in advance second key data generated from the identifier according to the predetermined key generation algorithm, and is authenticated by the first device with use of the second key data.

From US patent application US 2007/095902 A1, which has been published after the priority date of the present application, an information processing apparatus is known that permits a device which has set secret information into the information processing apparatus to refer to the secret information and inhibits other devices than the device from referring to the secret information, to thereby prevent secret information from leaking via any of the other devices. A determination is made whether there is a match between a device ID acquired from a device connected to an expansion card and stored in the expansion card and a device ID acquired in response to a request for reference to the secret information from a device to which the expansion card is currently connected. Reference to be made by the device to the secret information stored in the expansion card is permitted or inhibited according to a result of the determination.

US patent application US 2005/069139 A1 relates to a first apparatus for encrypting an information signal into an encryption-resultant signal, in which a first encryption key peculiar to the first apparatus is generated. Key information is read out from a replaceable recording medium. A decision is made as to whether or not the read-out key information has been generated by a second apparatus different from the first apparatus. A second encryption key is generated in response to the read-out key information when it is decided that the read-out key information has been generated by the second apparatus different from the first apparatus. One is selected from the first encryption key and the second encryption key as a final encryption key. An information signal is encrypted in response to the final encryption key.

### DISCLOSURE OF THE INVENTION

### PROBLEMS TO BE SOLVED BY THE INVENTION

If the data keeping system as described above is formed by using the authentication system based on the common key encryption scheme, the client apparatuses and the storage device should be securely provided with a shared common key in advance. Since the data keeping system described above must specify different common keys for the different client apparatuses, the number of common keys to be stored in the storage device would increase as the number of client apparatuses increases. This would increase the storage capacity needed in the storage device and would also increase the amount of management processing needed in the storage device. If the apparatuses and the device have a shared common key based on the Diffie-Hellman key exchange method, there is danger of a man-in-the-middle attack occurring whereby an attacker and the client apparatus would have a shared common key and the attacker would obtain registration information from the client apparatus.

If the data keeping system as described above is formed by using the authentication system based on the public key encryption scheme, the problems described above would be alleviated. The public key is not secret information, and all the public keys do not necessarily need to be stored in the storage device. However, the public key encryption scheme needs a much greater amount of computation than the common key encryption scheme and places a great load on the storage device. This would be a serious problem if the storage device has a low computation capability, such as a IC chip.

In view of these problems, it is an object of the present invention to provide a data keeping scheme implemented by a plurality of client apparatuses and a storage device shared by the client apparatuses, in which the load on the storage device can be reduced and the level of security can be improved.

### MEANS TO SOLVE THE PROBLEMS

According to the present invention, the following steps are executed:
(a) sending first storage-device-specific information specific to a storage device to a first client apparatus, from sender of the storage device;
(b) receiving the first storage-device-specific information by receiver of the first client apparatus;
(c) generating a first encryption key from the first storage-device-specific information and first client-apparatus key generation information, in key generator of the first client apparatus;
(d) generating first encrypted client-apparatus-specific information by encrypting first client-apparatus-specific information specific to the first client apparatus, with the first encryption key, in encryptor of the first client apparatus;
(e) sending the first encrypted client-apparatus-specific information to the storage device, from sender of the first client apparatus;
(f) receiving the first encrypted client-apparatus-specific information by receiver of the storage device;
(g) storing the first encrypted client-apparatus-specific information in memory of the storage device;
(h) sending second storage-device-specific information specific to the storage device to a second client apparatus, from the sender of the storage device;
(i) receiving the second storage-device-specific information by receiver of the second client apparatus;
(j) generating a second encryption key from the second storage-device-specific information and second client-apparatus key generation information, in key generator of the second client apparatus;
(k) generating second encrypted client-apparatus-specific information by encrypting second client-apparatus-specific information specific to the second client apparatus, with the second encryption key, in encryptor of the second client apparatus;
(l) sending the second encrypted client-apparatus-specific information to the storage device, from sender of the second client apparatus;
(m) receiving the second encrypted client-apparatus-specific information, by the receiver of the storage device; and
(n) judging in determiner of the storage device whether or not necessary requirements are satisfied, including such a condition that the second encrypted client-apparatus-specific information matches the first encrypted client-apparatus-specific information stored in the memory, and, when the necessary requirements are satisfied, identifying the second client apparatus as the first client apparatus by considering that the first storage-device-specific information, the first client-apparatus key generation information, and the first client-apparatus-specific information match the second storage-device-specific information, the second client-apparatus key generation information, and the second client-apparatus-specific information, respectively.

The first encrypted client-apparatus-specific information stored in the memory of the storage device in the step (g) is specific to each combination of the storage device and the first client apparatus. The second encrypted client-apparatus-specific information generated in the step (k) is specific to each combination of the storage device and the second client apparatus in the same way. By comparing those pieces of information in the step (n), it is judged whether or not the second client apparatus can be identified as the first client apparatus, and the right to access data in the storage device can be controlled accordingly.

According to the present invention, the judgment is made in the step (n) by comparing the pieces of encrypted client-apparatus-specific information. The storage device does not need to decrypt the first and second encrypted client-apparatus-specific information in order to judge whether or not the second client apparatus is identified as the first client apparatus. The present invention saves the storage device from storing or managing the key for each client apparatus and from executing decryption. Therefore, the present invention can reduce the load on the storage device. The present invention may use either the public key encryption scheme or the common key encryption scheme. If the public key encryption scheme is used in the present invention, an encryption key and a decryption key used in the present invention form a key pair of public key encryption scheme. If the common key encryption scheme is used in the present invention, both the encryption key and the decryption key used in the present invention are common keys.

In the present invention, a cryptographic technology is used to generate each encrypted client-apparatus-specific information, and it is judged whether or not the second client apparatus can be identified as the first client apparatus. A long key that can provide a high level of security can be generated in the step (c) or (j). Since the present invention saves each client apparatus from sharing an encryption key or a decryption key with the storage device, the client apparatus does not need to send information for sharing the encryption key and the decryption key with the storage device, to the outside. Unlike the algorithm based on the Diffie-Hellman key exchange method, the present invention prevents the client apparatus from sharing the encryption key or decryption key with an attacker making a man-in-the-middle attack. Accordingly, the present invention can provide a high level of security.

### EFFECTS OF THE INVENTION

According to the present invention, the data keeping scheme, implemented by a plurality of client apparatuses and a storage device shared by the apparatuses, can reduce the load on the storage device while improving the level of security.

### BRIEF DESCRIPTION OF THE DRAWINGS

Fig. 1 is a diagram representing the relationship between a storage device and client apparatuses;
Fig. 2 is a block diagram showing an example functional structure of a client apparatus according to first to fourth embodiments;
Fig. 3 is a block diagram showing an example functional structure of a storage device according to the first to fourth embodiments;
Fig. 4 is a flowchart showing a main processing flow in an initial registration process of the first to fourth embodiments;
Fig. 5 is a flowchart showing a main processing flow in an inquiry process of the first to fourth embodiments;
Fig. 6 is a flowchart showing a main processing flow in an overwrite process of the first to fourth embodiments;
Fig. 7 shows an example structure of data stored in the storage device in the third embodiment;
Fig. 8 is a block diagram showing an example functional structure of a client apparatus according to a fifth embodiment;
Fig. 9 is a block diagram showing an example functional structure of a storage device according to the fifth embodiment;
Fig. 10 is a flowchart showing a main processing flow in an initial registration process of the fifth embodiment;
Fig. 11 is a flowchart showing a main processing flow in an inquiry process of the fifth embodiment;
Fig. 12 is a flowchart showing a main processing flow in an overwrite process of the fifth embodiment;
Fig. 13 is a block diagram showing an example functional structure of a client apparatus according to a sixth embodiment;
Fig. 14 is a block diagram showing an example functional structure of a storage device according to the sixth embodiment;
Fig. 15 is a flowchart showing a main processing flow in an initial registration process of the sixth embodiment;
Fig. 16 is a flowchart showing a main processing flow in an inquiry process of the sixth embodiment;
Fig. 17 is a flowchart showing a main processing flow in an overwrite process of the sixth embodiment;
Fig. 18 is a block diagram showing an example functional structure of a client apparatus according to a seventh embodiment;
Fig. 19 is a block diagram showing an example functional structure of a storage device according to the seventh embodiment;
Fig. 20 is a flowchart showing a main processing flow in an initial registration process of the seventh embodiment;
Fig. 21 is a flowchart showing a main processing flow in an inquiry process of the seventh embodiment; and
Fig. 22 is a flowchart showing a main processing flow in an overwrite process of the seventh embodiment.

### DESCRIPTION OF REFERENCE NUMERALS

100, 300, 500, 700: Client apparatuses
200, 400, 600, 800: Storage devices

### BEST MODES FOR CARRYING OUT THE INVENTION

Embodiments of a data keeping system in which a plurality of client apparatuses share a storage device will be described. In an example of the system, coupon data issued and managed separately by a plurality of shops are stored in one storage device of a customer. In this case, an example of the storage device is a IC chip included in a mobile phone or a smart card of the customer. An example of the client apparatus is a computer equipped with a reader-writer. In this case, a shop issues coupon data to a customer when he or she buys an item at the shop. By using the client apparatus provided at each shop, the coupon data is input to and stored in the storage device of the customer. The customer uses the coupon data at the time of purchase of an article.

In the embodiments described below, the processes performed in this system include an initial registration process, an inquiry process, and an overwrite process. In the initial registration process, the storage device stores information used for authentication of the client apparatus. An example of the initial registration process is a process in which the client apparatus provided at a shop stores the information used for authentication in the storage device of a new customer. In the inquiry process, the storage device authenticates the client apparatus, and the authenticated client apparatus reads information stored in the storage device. An example of the inquiry process includes these steps: The storage device authenticates the client apparatus when the customer or a shop attempts to confirm the coupon data stored in the storage device; and the authenticated client apparatus reads the coupon data stored in the storage device. In the overwrite process, the storage device authenticates the client apparatus, and the authenticated client apparatus updates the information stored in the storage device. An example of the overwrite process includes these steps: The storage device authenticates the client apparatus provided at a shop when the customer buys an article of 300 yen, using balance coupon data of 1000 yen stored in the storage device; and the authenticated client apparatus updates the balance coupon data stored in the storage device to 700 yen.

Terms used below will be described here. Storage-device-specific information is specific to each storage device and different among storage devices. Client-apparatus key generation information is fixed information that can be specified independently by the client apparatus and is kept secret. Registration information is encrypted and stored in the storage device. An example of the registration information is coupon data. Client-apparatus-specific information is specific to each client apparatus and is fixed information, and the information can be specified independently by the client apparatus and is kept secret. Display information is information to be displayed on a display unit, of the data stored in the storage device. An example of the display information is information concerning coupon data stored in the storage device included in a mobile phone and is displayed on the display unit of the mobile phone. Update display information is display information used in the update process. In the embodiments, the display information and the update display information are optional. The equation M' = P(M) represents to encrypt information M with an encryption key P.
The equation M = Q(M') represents to decrypt encrypted information M' with a decryption key Q. Either a common key encryption scheme or a public key encryption scheme may be used. In the common key encryption scheme, the encryption key and the decryption key are the same common key. In the public key encryption scheme, the encryption key is a secret key, and the decryption key is a corresponding public key. In the embodiments, the right apparatus for decrypting encrypted information is just the apparatus that has encrypted the information, and the public key encryption scheme is not required. Accordingly, the common key encryption scheme is preferred in the embodiments since the encryption scheme requires a small amount of computation. In the subsequent description, to send information from a first processing unit to a second processing unit means that information output from the first processing unit is stored in a temporary memory (not shown), and the second processing unit reads the information from the temporary memory into the latter processing unit, and this description will be omitted below. A similar description applies to input of information generated by one processing unit to another processing unit. In the subsequent description, duplication will be omitted.

### [First Embodiment]

A first embodiment of the present invention will be described.

### [Structure]

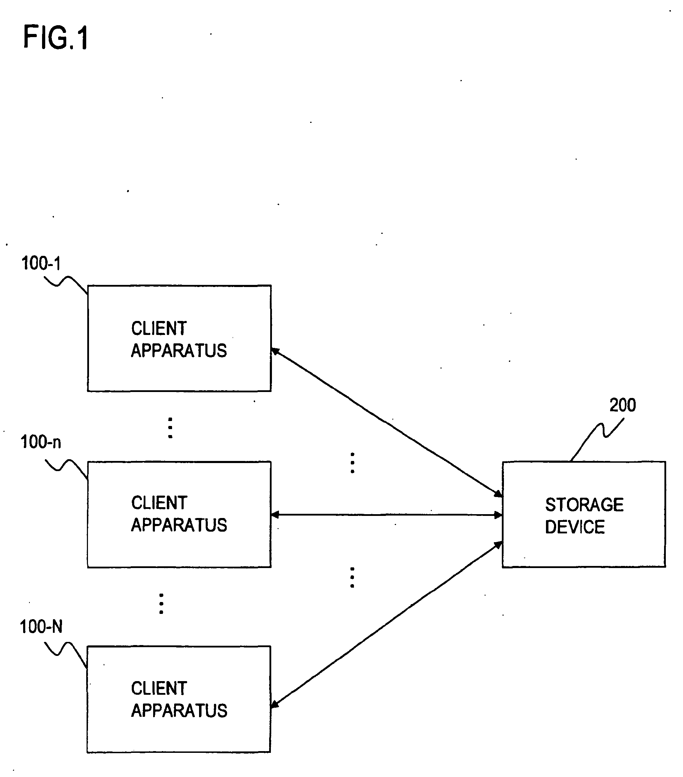

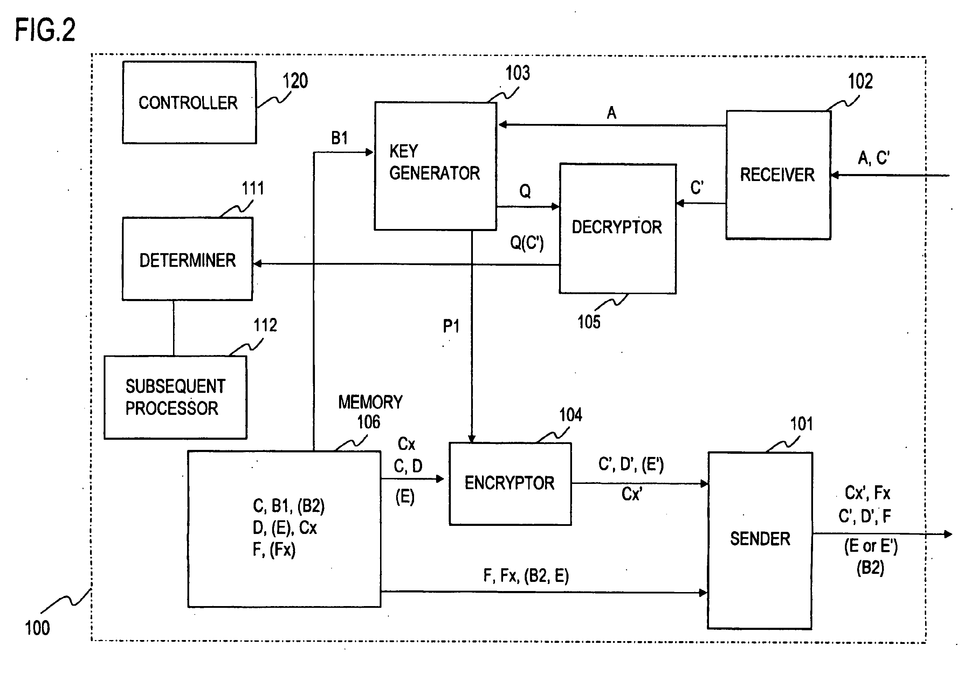

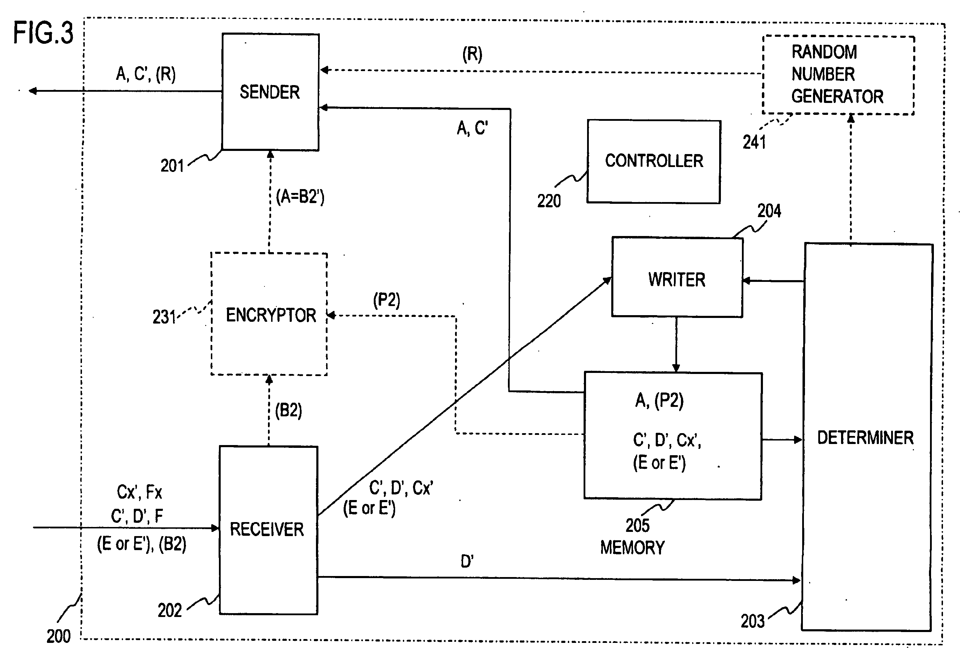

Fig. 1 is a diagram representing the relationship between a storage device and client apparatuses in the first embodiment. Fig. 2 is a block diagram showing an example functional structure of the client apparatus in the first embodiment. Fig. 3 is a block diagram showing an example functional structure of the storage device in the first embodiment.

As shown in Fig. 1, the system of the first embodiment includes a plurality of client apparatuses 100-n (n = 1 to N) and one storage device 200. For the sake of simplicity, Fig. 1 shows just one storage device 200, but a plurality of storage devices 200 may be included. Further, the client apparatus 100-n will be referred to as the client apparatus 100, for the sake of simplicity.

As shown in Fig. 2, the client apparatus 100 of the first embodiment includes a sender 101, a receiver 102, a key generator 103, an encryptor 104, a decryptor 105, a memory 106, a determiner 111, a subsequent processor 112, and a controller 120. One example of the client apparatus 100 of the first embodiment is a computer equipped with a reader-writer. In that case, one example of the sender 101 and the receiver 102 is a known communication unit driven by a central processing unit (CPU) into which a predetermined program is read. One example of the key generator 103, the encryptor 104, the decryptor 105, the determiner 111, the subsequent processor 112, and the controller 120 is a CPU into which a predetermined program is read, or a semiconductor arithmetic circuit. The controller 120 controls the whole of the client apparatus 100. An example of the memory 106 is at least a part of a semiconductor memory, a hard disk, a magnetic recording apparatus, an optical disc, or a magneto-optical recording medium. The units included in the client apparatus 100 may be placed in a single housing or may be placed in a plurality of housings so long as security is ensured. The determiner 111 and the subsequent processor 112 may also be provided outside the client apparatus 100.

As shown in Fig. 3, the storage device 200 of the first embodiment includes a sender 201, a receiver 202, a determiner 203, a writer 204, a memory 205, and a controller 220. One example of the storage device 200 of the first embodiment is a IC chip having a data storage function, an arithmetic function, and a communication function. In that case, the sender 201 and the receiver 202 are known communication units, and the determiner 203, the writer 204, and the controller 220 are a CPU or a semiconductor arithmetic circuit into which a predetermined program has been read. The memory 205 is a semiconductor memory or the like.

### [Pre-processing]

Client-apparatus key generation information B1 and client-apparatus-specific information D corresponding to the client apparatus 100 are stored in the memory 106 of the client apparatus 100. Storage-device-specific information A corresponding to the storage device 200 are stored in the memory 205 of the storage device 200.

### [Initial registration process]

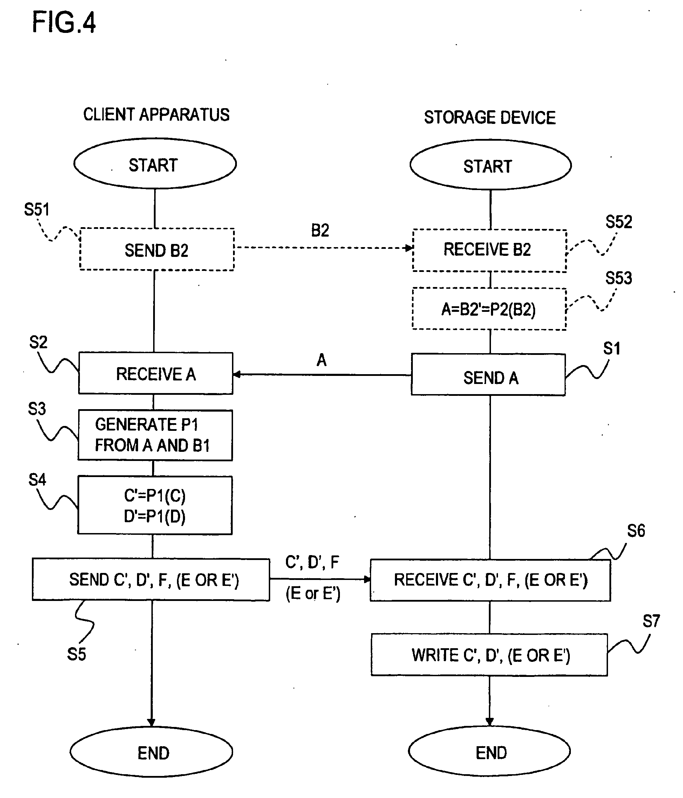

Fig. 4 is a flowchart showing a main processing flow in an initial registration process of the first embodiment.

The sender 201 of the storage device 200 sends the storage-device-specific information A read from the memory 205 to the client apparatus 100 (step S1). The receiver 102 of the client apparatus 100 receives the storage-device-specific information A (step S2). When the receiver 102 receives the storage-device-specific information A, the key generator 103 generates an encryption key P1 from the storage-device-specific information A and the client-apparatus key generation information B1 (step S3). The encryption key P1 generated by the key generator 103 is input to the encryptor 104.

The client-apparatus-specific information D and registration information C both stored in advance in the memory 106 are input to the encryptor 104. The encryptor 104 encrypts the client-apparatus-specific information D and the registration information C separately with the encryption key P1 to generate encrypted client-apparatus-specific information D' and encrypted registration information C'. The encryptor 104 generates the information through operations expressed as D' = P1(D) and C' = P1(C), respectively (step S4). The encrypted client-apparatus-specific information D' and the encrypted registration information C' are sent to the sender 101. Non-encrypted display information F that has been generated by the controller 120 and stored in the memory 106 is read and sent to the sender 101. The sender 101 sends the encrypted client-apparatus-specific information D', the encrypted registration information C', and the non-encrypted display information F, together with an initial registration request signal (not shown), to the storage device 200 (step S5). Sending the display information F is optional.

The receiver 202 of the storage device 200 receives the encrypted client-apparatus-specific information D', the encrypted registration information C', and the non-encrypted display information F, together with the initial registration request signal (not shown) (step S6). The encrypted client-apparatus-specific information D' and the encrypted registration information C' are sent to the writer 204. The writer 204 writes the encrypted client-apparatus-specific information D' and the encrypted registration information C' into the memory 205 in association with each other (step S7). The other received information is sent to the controller 220. The controller 220 displays the display information F on the display unit (not shown) of the mobile phone or the like when necessary. The display information F may be written into the memory 205 in association with the encrypted client-apparatus-specific information D'.

As has been described above, the storage-device-specific information A is specific information different among storage devices. The client-apparatus key generation information B 1 is secret information specified independently for each client apparatus. That is, the key generator 103 generates different encryption keys P1 for different combinations of the storage device and the client apparatus. Further, the client-apparatus-specific information D is specific information different among the client apparatuses. Therefore, the encrypted client-apparatus-specific information D' differs depending on the combination of the storage device and the client apparatus and can be used for authentication. The encrypted registration information C' differs depending on the combination of the storage device and the client apparatus and can be decrypted only when both the storage-device-specific information A and the client-apparatus key generation information B 1 are known. This means that another client apparatus cannot decrypt the encrypted registration information C'.

### [Inquiry process]

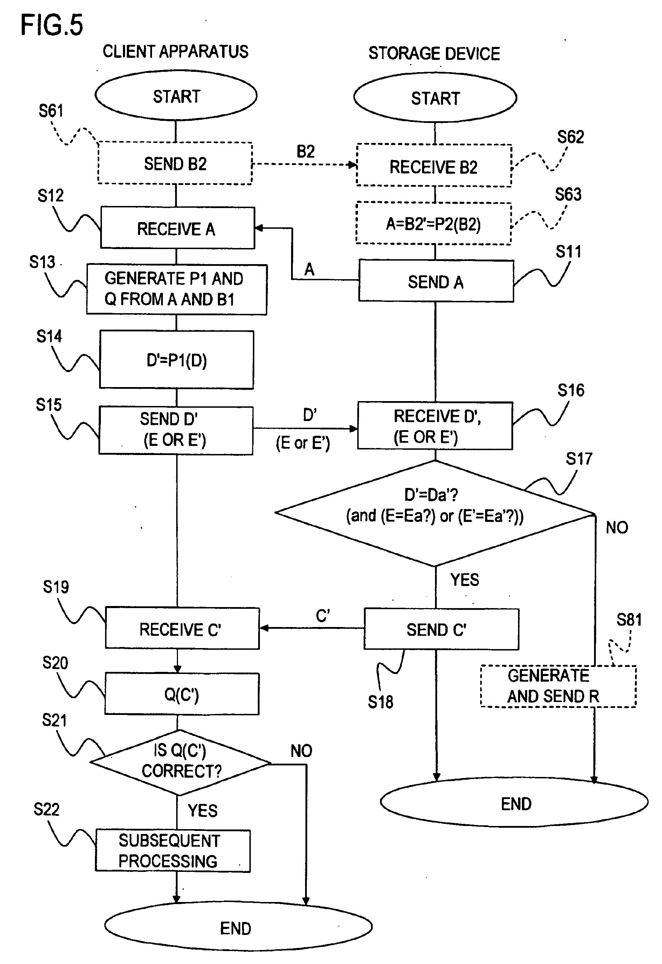

Fig. 5 is a flowchart showing a main processing flow in an inquiry process of the first embodiment.

As in steps S 1 and S2 in the initial registration process, the storage device 200 sends the storage-device-specific information A (step S 11), and the client apparatus 100 receives the storage-device-specific information A (step S12).

When the receiver 102 of the client apparatus 100 receives the storage-device-specific information A, the key generator 103 generates an encryption key P1 and a decryption key Q corresponding to the encryption key P1, in accordance with the storage-device-specific information A and the client-apparatus key generation information B1 (step S13). The encryption key P1 generated by the key generator 103 is input to the encryptor 104, and the decryption key Q is input to the decryptor 105.

The encryptor 104 encrypts the client-apparatus-specific information D with the encryption key P1 generated in step S 13 to generate encrypted client-apparatus-specific information D' = P1(D) (step S14). The encrypted client-apparatus-specific information D' is sent to the sender 101. The sender 101 sends the encrypted client-apparatus-specific information D' together with an inquiry request signal (not shown) to the storage device 200 (step S15).

The receiver 202 of the storage device 200 receives the encrypted client-apparatus-specific information D' (step S16). The encrypted client-apparatus-specific information D' is sent to the determiner 203. Each encrypted client-apparatus-specific information D' stored in the memory 205 (the client-apparatus-specific information stored in the initial registration process will be identified with Da' when it should be distinguished from the received and encrypted client-apparatus-specific information) is also input to the determiner 203. The determiner 203 judges whether the encrypted client-apparatus-specific information D' received in the inquiry process matches any encrypted client-apparatus-specific information Da' (step S17). If the information D' matches any information Da', there is a high possibility that the client apparatus that is performing the inquiry process matches the client apparatus that has performed the initial registration process. If the determiner 203 judges that the information D' matches any information Da', the sender 201 sends the encrypted registration information C' corresponding to the encrypted client-apparatus-specific information D' stored in the memory 205 to the client apparatus 100 (step S18). The encrypted registration information C' has been stored in the memory 205 in association with the client-apparatus-specific information Da' encrypted in the initial registration process. If the determiner 203 judges that the information D' does not match any information Da', the process is terminated because there is a high possibility that an apparatus of an attacker is attempting to access the storage device 200.

The receiver 102 of the client apparatus 100 receives the encrypted registration information C' (step S19), and the information C' is input to the decryptor 105. The decryptor 105 decrypts the encrypted registration information C' with the decryption key Q generated in step S 13 of the inquiry process to generate registration information C = Q(C') (step S20).

The registration information C is input to the determiner 111. The determiner 111 judges whether the registration information C is correct (step S21). For example, the determiner 111 judges whether the format of the registration information C is correct. If the determiner 111 judges that the information is correct, the subsequent processor 112 performs subsequent processing (step S22). The subsequent processing may include, for instance, value addition or subtraction in a coupon, the confirmation of membership, the permission to enter a room, starting of a car, and the activation of a PC. If the determiner 111 judges that the registration information C is incorrect, the subsequent processing will not be performed. Steps S21 and S22 are optional.

As has been described above, the key generator 103 generates different combinations of the encryption key P1 and the decryption key Q for different combinations of the client apparatus and the storage device. This means that the storage device 200 can judge whether the client apparatus performing the inquiry process is the right client apparatus that has performed the initial registration process, by judging whether the client-apparatus-specific information Da' encrypted with the encryption key P1 in the initial registration process matches the client-apparatus-specific information D' encrypted with the encryption key P1 in the inquiry process.

If the encrypted client-apparatus-specific information generated by an apparatus of the attacker matches by coincidence the encrypted client-apparatus-specific information generated by the client apparatus that has performed the initial registration, the apparatus of the attacker can obtain from the storage device the encrypted registration information C' stored by the client apparatus that has performed the initial registration process. Alternatively, the attacker can skim the encrypted client-apparatus-specific information and, by using that information, can obtain the encrypted registration information C' stored in the storage device by the client apparatus that has performed the initial registration process. There is also a risk that the attacker will obtain the encrypted registration information C' directly by skimming. In those cases, however, the attacker needs the decryption key Q generated by using the storage-device-specific information A, which is secret information specific to the client apparatus, to decrypt the obtained encrypted registration information C' correctly. Therefore, the information can be prevented from leaking to the attacker.

### [Overwrite process]

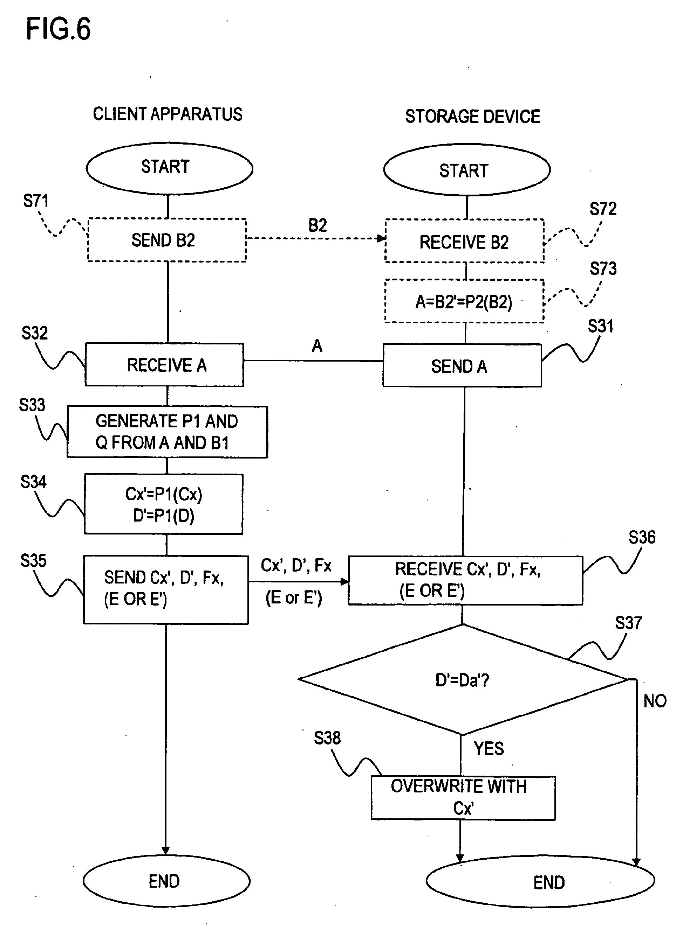

Fig. 6 is a flowchart showing a main processing flow in an overwrite process of the first embodiment. First, the storage device 200 sends the storage-device-specific information A (step S31), and the client apparatus 100 receives the storage-device-specific information A (step S32), as in steps S 1 and S2 in the initial registration process. Next, the key generator 103 of the client apparatus 100 generates an encryption key P1 and a decryption key Q (step S33), as in step S13 of the inquiry process.

The client-apparatus-specific information D and update registration information Cx to be used for overwriting, both stored in the memory 106 of the client apparatus 100 are input to the encryptor 104. The encryptor 104 encrypts the registration information Cx and the client-apparatus-specific information D with the encryption key P1 generated in step S33 to generate encrypted registration information Cx' = P1(Cx) and encrypted client-apparatus-specific information D' = P1(D) (step S34). These pieces of information are sent to the sender 101. Update display information Fx that has been generated by the controller 120, that has been stored in and read from the memory 106, and that has not yet been encrypted is also sent to the sender 101. The sender 101 sends the encrypted registration information Cx', the encrypted client-apparatus-specific information D', the update display information Fx to the storage device 200 (step S35). Sending the update display information Fx is optional.

The receiver 202 of the storage device 200 receives the information Cx', the information D', and the information Fx (step S36). The update display information Fx is sent to the controller 220. The controller 220 displays the update display information Fx on the display unit (not shown) of a mobile telephone or the like, when necessary. The encrypted client-apparatus-specific information D' is sent to the determiner 203. Each encrypted client-apparatus-specific information Da' stored in the memory 205 is also input to the determiner 203. The determiner 203 judges whether the received encrypted client-apparatus-specific information D' matches any encrypted client-apparatus-specific information Da' stored in the memory 205 (step S37). The encrypted client-apparatus-specific information Da' stored in the memory 205 has been received in the initial registration process (step S6 in Fig. 4) and stored in the memory 205, as has been described above.

When the determiner 203 judges that the information D' matches any information Da', the encrypted registration information Cx' is sent to the writer 204, and the writer 204 overwrites the encrypted registration information C corresponding to the matching encrypted client-apparatus-specific information Da' with the encrypted registration information Cx' (step S38). Now, the encrypted registration information Cx' is associated with the matching encrypted client-apparatus-specific information Da'. If the determiner 203 judges that the information D' does not match any information Da', the controller 220 terminates the processing without overwriting information.

The storage device 200 can judge whether the client apparatus performing the overwrite process is the right client apparatus that has performed the initial registration process, by judging whether the client-apparatus-specific information Da' encrypted with the encryption key P1 in the initial registration process matches the client-apparatus-specific information D' encrypted with the encryption key P1 in the overwrite process, as described above. This makes it possible to protect the encrypted registration information stored in the storage device 200 by the client apparatus that has performed the initial registration process from being altered by an apparatus of the attacker.

According to the first embodiment, security can be ensured even in the following circumstances: The attacker has skimmed only encrypted client-apparatus-specific information and encrypted registration information that have been sent from a client apparatus to a storage device (a IC chip in a mobile phone or the like) and copied these pieces of information into an unauthorized storage device (a IC chip in a mobile phone or the like). The attacker, however, does not have the storage-device-specific information A of the storage device and cannot have the client apparatus generate the encryption key P1, which is the correct key. Accordingly, in the session between the unauthorized storage device and the client apparatus, the encrypted client-apparatus-specific information D' generated by the client apparatus differs from the encrypted client-apparatus-specific information Da' copied into the unauthorized storage device. Because the judgment made in the inquiry process or the overwrite process is No (step S17 or S37), fraudulent operations can be prevented.

Combination use of challenge-and-response authentication and the described method will improve the level of security. To be more specific, the storage device 200 keeps a one-time authentication encryption key in the memory 205, and the client apparatus 100 keeps a one-time authentication decryption key corresponding to the authentication encryption key in the memory 106. Before the storage device 200 sends the storage-device-specific information A (prior to steps S 1, S 11, and S31), the client apparatus 100 has its random number generator (not shown) generate a random number S and has the sender 101 send the random number. When the receiver 202 receives the random number S, the storage device 200 encrypts the random number S (not shown) with the authentication encryption key. The storage device 200 sends the encrypted random number S' to the client apparatus 100, and the client apparatus 100 decrypts the encrypted random number S' with the authentication decryption key. If the decrypted random number S matches the random number S generated by the client apparatus 100, the client apparatus 100 can authenticate the storage device 200.

In the first embodiment, it is judged in the inquiry process or the overwrite process whether the storage device satisfies such a necessary requirement that any encrypted client-apparatus-specific information stored in the initial registration process matches the encrypted client-apparatus-specific information D' received in the inquiry process or the overwrite process. If the storage device satisfies the necessary requirement, it is assumed that the storage-device-specific information, the client-apparatus key generation information, and the client-apparatus specific information in the initial registration process match the client-apparatus key generation information and the client-apparatus-specific information in the inquiry process or the overwrite process, respectively. It is judged that the client apparatus performing the inquiry process or the overwrite process is the right client apparatus that has performed the initial registration process (step S17 or S37). In this process, the storage device does not need to decrypt the encrypted client-apparatus-specific information. In the first embodiment, the storage device does not need to store or manage the key corresponding to each client apparatus, and the decryption process does not need to be executed. Therefore, the load on the storage device can be reduced.

In the first embodiment, each encrypted client-apparatus-specific information is generated by using cryptography that can provide a high level of security, and the client apparatus is authenticated by using this information. Since each client apparatus and the storage device do not need to share a key, the client apparatus does not need to send to the outside information for sharing the encryption key and the decryption key with the storage device. Accordingly, the first embodiment can secure a high level of security.

The client apparatus that has performed the initial registration process in the first embodiment will be referred to as a first client apparatus. The client-apparatus key generation information B1 and the client-apparatus-specific information D of the client apparatus will be referred to as first client-apparatus key generation information and first client-apparatus-specific information, respectively. The storage-device-specific information of the storage device that has performed the initial registration process will be referred to as first storage-device-specific information. The encryption key P1 generated by the client apparatus that has performed the initial registration process and the encrypted client-apparatus-specific information D' will be referred to as a first encryption key and first encrypted client-apparatus-specific information, respectively.

The client apparatus that has performed the inquiry process or overwrite process in the first embodiment will be referred to as a second client apparatus. The client-apparatus key generation information B 1 and client-apparatus-specific information D of the client apparatus will be referred to as second client-apparatus key generation information and second client-apparatus-specific information respectively. The storage-device-specific information of the storage device that has performed the inquiry process or the overwrite process will be referred to as second storage-device-specific information. The encryption key P1 generated by the client apparatus that has performed the inquiry process or the overwrite process and the encrypted client-apparatus-specific information D' will be referred to as a second encryption key and second encrypted client-apparatus-specific information, respectively.

If the combinations of the storage device and the client apparatus that has performed the initial registration process, the inquiry process, and the overwrite process are the same, it is natural that the first client apparatus means the same thing as the second client apparatus; the first client-apparatus key generation information means the same thing as the second client-apparatus key generation information; the first client-apparatus-specific information means the same thing as the second client-apparatus-specific information; and the first storage-device-specific information means the same thing as the second storage-device-specific information.

### [Second Embodiment]

A second embodiment of the present invention will be described. The second embodiment is a modification of the first embodiment. The following description will focus on points where the second embodiment differs from the first embodiment.

### [Structure]

The structures of a client apparatus 100 and a storage device 200 in the second embodiment will be described with reference to Figs. 2 and 3.

The client apparatus 100 of the second embodiment stores client-apparatus key generation information B2 (placed in parentheses) specific to the client apparatus 100 as well in the memory 106 of the client apparatus 100. The client-apparatus key generation information B2 is secret information specified independently by the client apparatus 100.

The storage device 200 in the second embodiment also includes an encryptor 231 (indicated by a broken line) and stores an encryption key P2 (placed in parentheses) in the memory 205. The encryption key P2 differs among storage devices, and is kept secret within each storage device. In the second embodiment, the memory 205 of the storage device 200 does not need to store the storage-device-specific information A. The storage-device-specific information A is generated in the initial registration process, the inquiry process, and the overwrite process, by using the client-apparatus key generation information B2 and the encryption key P2.

### [Initial registration process, inquiry process, overwrite process]

Main processing flows in an initial registration process, an inquiry process, and an overwrite process of the second embodiment will be described with reference to Figs. 4, 5, and 6, respectively. In the second embodiment, the initial registration process, the inquiry process, and the overwrite process will be described altogether.

The sender 101 in the client apparatus 100 sends the client-apparatus key generation information B2 read from the memory 106 to the storage device 200 (steps S51, S61, and S71). The receiver 202 in the storage device 200 receives the client-apparatus key generation information B2 (steps S52, S62, and S72) and inputs the information B2 to the encryptor 231. The encryptor 231 encrypts the information B2 with the encryption key P2 read from the memory 205 (B2' = P2(B2), steps S53, S63, and S73). The sender 201 sends encrypted client-apparatus key generation information B2' as storage-device-specific information A to the client apparatus 100 (steps S1, S 11, and S31). The subsequent steps are the same as in the first embodiment.

The encryption key P2 is used only in the storage device 200, and there is no need to worry about skimming of information. Since the storage-device-specific information A is generated from the client-apparatus key generation information B2 and the encryption key P2, the storage-device-specific information A to be generated differs depending on the combination of the client apparatus and the storage device. The attacker could skim the storage-device-specific information A sent from the storage device to a client apparatus but cannot generate the storage-device-specific information A to be sent to the client apparatus corresponding to the storage device because the attacker does not know the encryption key P2 of the storage device. This improves the level of security.

In a modification of the second embodiment, the client-apparatus key generation information B2 may be the same as the client-apparatus-specific information D. In that case, the level of security would be lowered, but the amount of information kept by the client apparatus 100 could be reduced.

In the second embodiment, the client-apparatus key generation information B2 of the client apparatus that performs the initial registration process will be referred to as third client-apparatus key generation information. The encryption key P2 of the storage device that performs the initial registration process will be referred to as a third encryption key.

In the second embodiment, the client-apparatus key generation information B2 of the client apparatus that performs the inquiry process or the overwrite process will be referred to as fourth client-apparatus key generation information. The encryption key P2 of the storage device that performs the inquiry process or the overwrite process will be referred to as a fourth encryption key.

If the combinations of the storage device 200 and the client apparatus 100 that has performed the initial registration process, the inquiry process, and the overwrite process are the same, it is natural that the first client apparatus means the same thing as the second client apparatus; the third client-apparatus key generation information means the same thing as the fourth client-apparatus key generation information; and the third encryption key means the same thing as the fourth encryption key.

### [Third Embodiment]

A third embodiment of the present invention will be described. The third embodiment is a modification of the first and second embodiments. The following description will focus on points where the third embodiment differs from the first and second embodiments.

### [Structure]

The structures of a client apparatus 100 and a storage device 200 in the third embodiment will be described with reference to Figs. 2 and 3.

In the third embodiment, client-apparatus identification information E (placed in parenthesis) specific to the client apparatus 100 is also stored in the memory 106 of the client apparatus. The client-apparatus identification information E is always different among client apparatuses and is specified to identify uniquely a single client apparatus among the client apparatuses. The client-apparatus identification information E may be specified for each group of shops (chain stores, for instance) in each of which the client apparatus 100 is placed. In Figs. 2 to 6, the information E is placed in parentheses.

Main processing flows in an initial registration process, an inquiry process, and an overwrite process in the third embodiment will be described with reference to Figs. 4, 5, and 6.

### [Initial registration process]

First, steps S 1 to S4 are performed as in the first embodiment. Alternatively, steps S51 to S53 and steps S 1 to S4 are performed as in the second embodiment.

The sender 101 of the client apparatus 100 sends the encrypted client-apparatus-specific information D', the encrypted registration information C', and the non-encrypted display information F, and also the client-apparatus identification information E read from the memory 106 to the storage device 200 (step S5). Alternatively, the encryptor 104 may generate encrypted client-apparatus identification information E' by encrypting the client-apparatus identification information E with the encryption key P1, and the sender 101 may send the information E' instead of the information E.

In step S6, the receiver 202 of the storage device 200 receives the information D', the information C', the information F, and the information E (or information E'). When the receiver 202 receives these pieces of information, the writer 204 writes the information D', the information C', and the information E (or information E') into the memory 205 in association with each other, in step S7.

### [Inquiry process, overwrite process]

The third embodiment differs from the first or second embodiment in that the sender 101 in the client apparatus 100 sends the client-apparatus identification information E (or information E') in addition to the information D' or the like to the storage device 200 in steps S15 and S35. In steps S16 and S36, the receiver 202 in the storage device 200 receives the information E (or information E') in addition to the information D' or the like. In steps S 17 and S37, the determiner 203 judges (i) whether the information D' matches the information Da' and (ii) whether the information E matches the information Ea stored in the memory 205 in association with the information Da' (or whether the information E' matches the information Ea' stored in the memory 205 in association with the information Da'). The information Ea and the information Ea' are the client-apparatus identification information E and the encrypted client-apparatus identification information E' stored in the memory 205 of the storage device in the initial registration process, respectively. When both (i) and (ii) are satisfied, it is judged that the client apparatus that is performing the inquiry process or overwrite process is the right client apparatus that has performed the initial registration process, and the processing goes to step S18 or S38.

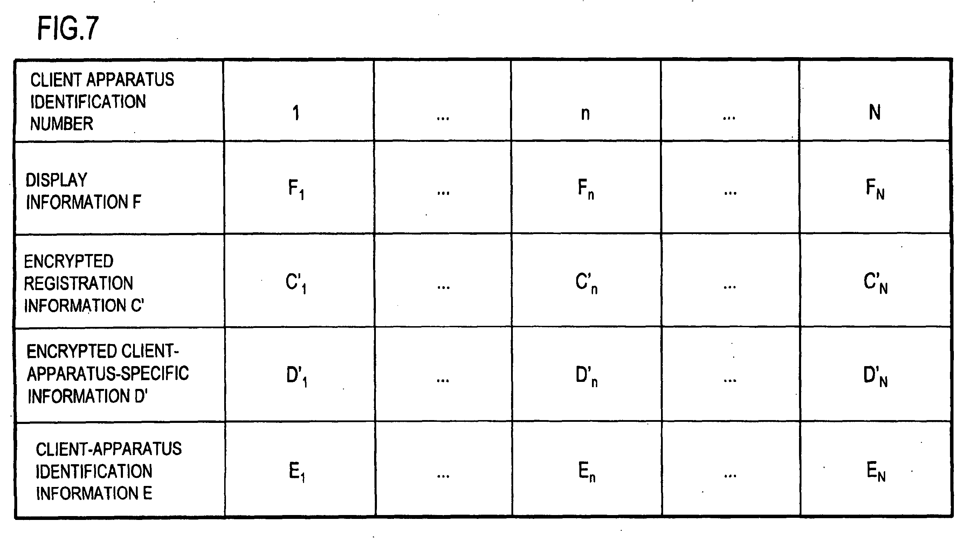

Fig. 7 is a view showing an example structure of data stored in the memory of the storage device in the third embodiment.

As has been described above, a plurality of client apparatuses share a single storage device, and data is stored there, in the present invention. In the example shown in Fig. 7, the display information F, the encrypted registration information C', the encrypted client-apparatus-specific information D', and the client-apparatus identification information E are stored in association with the identification number of each client apparatus. The information E' is omitted here. If the client-apparatus identification information E (or information E') is not used as is the case with the first and second embodiments, the row of the client-apparatus identification information E is omitted in the data structure. If the display information F is not stored, the row of the display information F is omitted in the data structure. In Fig. 7, each client apparatus is assigned a client apparatus identification number. The identification number may be given to a group of client apparatuses.

In the third embodiment, the client-apparatus identification information E is used, as has been described above. Necessary requirements are: (i) The information D' matches the information Da'; and (ii) the information E matches the information Ea stored in the memory 205 in association with the information Da' (alternatively, the information E' matches the information Ea' stored in the memory 205 in association with the information Da'). It is judged whether the necessary requirements are satisfied. Since the client-apparatus identification information always has different values for different client apparatuses, even if an attack is made from the outside, the two requirements will not be satisfied unless an error occurs. An error could occur, but the possibility is very low. Accordingly, the level of security is improved in comparison with the first and second embodiments.

In the third embodiment, the client-apparatus identification information E or the encrypted information E' of the client apparatus that has performed the initial registration process will be referred to as first client-apparatus identification information. The client-apparatus identification information E or the encrypted information E' of the client apparatus that has performed the inquiry process or overwrite process will be referred to as second client-apparatus identification information. If the same client apparatus has performed the initial registration process, the inquiry process, and the overwrite process, it is natural that the first client-apparatus identification information means the same thing as the second client-apparatus identification information.

### [Fourth Embodiment]

A fourth embodiment of the present invention will be described. The fourth embodiment is a modification of the first to third embodiments. The following description will focus on points where the fourth embodiment differs from the first to third embodiments.

In terms of the structure, the fourth embodiment is distinguished by the storage device 200 further including a random number generator 241, which is indicated by a broken line (in Fig. 3). In terms of processes, the fourth embodiment differs from the first to third embodiments just in the inquiry process (see Fig. 5).

In the inquiry process, if the determiner 203 in the storage device 200 judges that the information D' matches the information Da' (in the third embodiment, it is also judged that the information E matches the information Ea), the encrypted registration information C' is sent to the client apparatus 100 (step S18 in Fig. 5). If nothing is sent when the information D' does not match the information Da' (in the third embodiment, when the information E does not match the information Ea), it is known from the outside that the information D' is not right. Then, an apparatus of the attacker can continue sending a variety of information D' and E to the storage device 200 until the encrypted registration information C' is sent. This means that the apparatus of the attacker will know that the information D' and E causing the information C' to be sent is the right one stored in the storage device 200. To avoid this, if it is judged that the client apparatus performing the inquiry process is not the right client apparatus because the determiner 203 judges that the information D' does not match the information Da' (in the third embodiment, the information E does not match the information Ea), the random number generator 241 generates a random number R, and the sender 201 sends the random number R (step S81 in Fig. 5). Then, the attacker cannot discriminate between the random number R and the encrypted registration information C' and cannot find the information D' and the information E stored in the storage device 200. The random number R plays the role of a dummy signal for the encrypted registration information C'. Therefore, the level of security is improved.

### [Fifth Embodiment]

A fifth embodiment of the present invention will be described. The fifth embodiment is a modification of the first to fourth embodiments. The following description will focus on points where the fifth embodiment differs from the first to fourth embodiments.

The fifth embodiment will prevent fraudulent operations such as skimming of data exchanged between the client apparatus and the storage device and storing old data that were stored in the storage device again in the same storage device. For example, suppose that the storage device has encrypted coupon data of 100 points as encrypted registration information. When the encrypted coupon data stored in the storage device is used in shopping, the attacker could skim the data exchanged between the client apparatus and the storage device. Then, the attacker could store the old data stored in the storage device before shopping again in the same storage device, in accordance with the skimmed data. The fifth embodiment can prevent that type of fraudulent operation.

### [Structure]

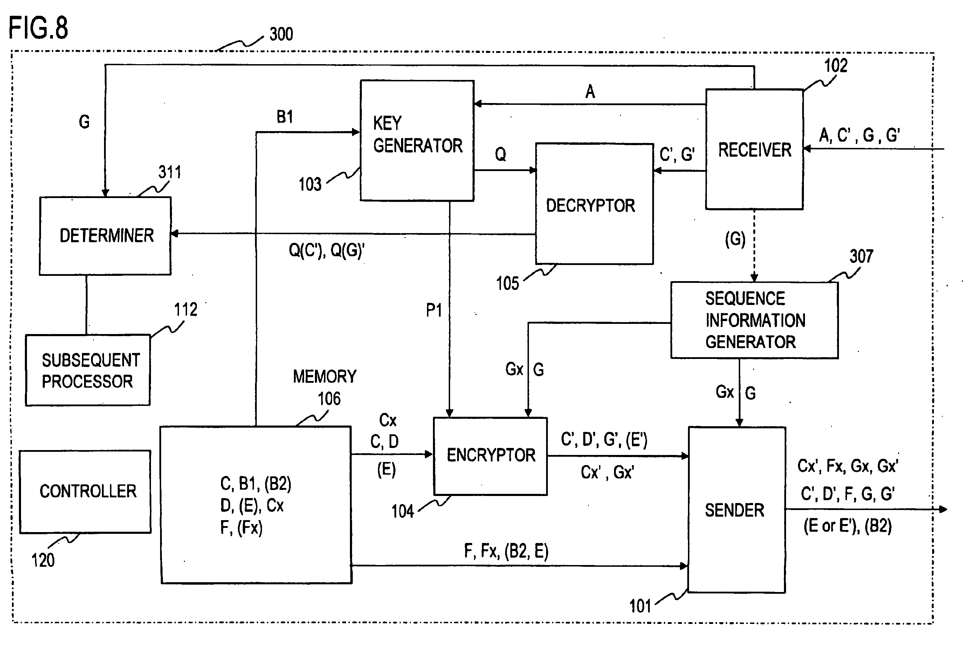

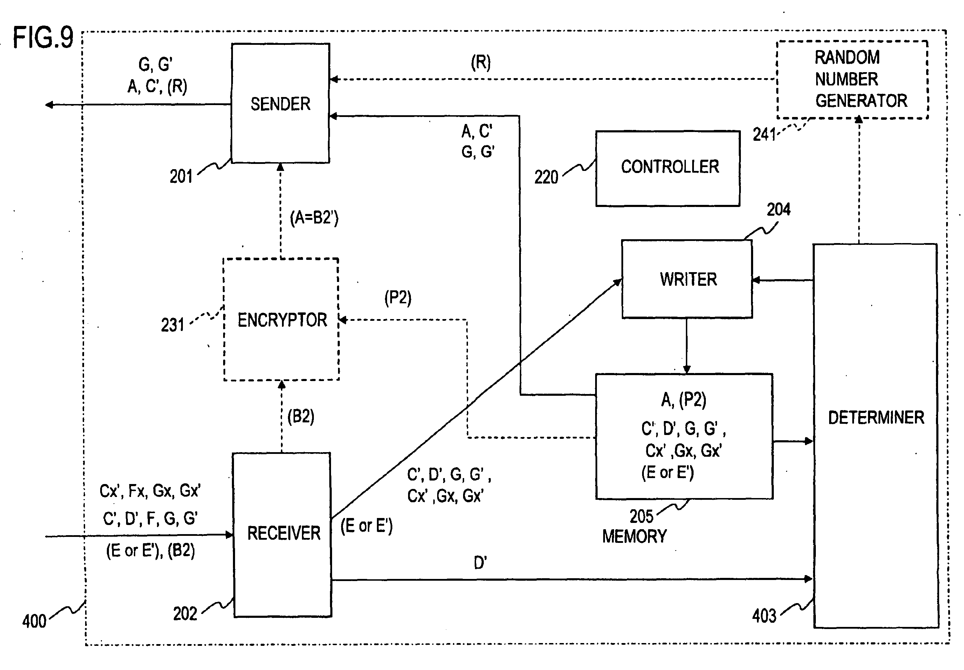

Fig. 8 is a block diagram showing an example functional structure of a client apparatus 300 in the fifth embodiment. Fig. 9 is a block diagram showing an example functional structure of a storage device 400 in the fifth embodiment. Differences between the client apparatus and storage device in the fifth embodiment and those in the first to fourth embodiments will be described with reference to Figs. 8 and 9.

As shown in Fig. 8, the client apparatus 300 in the fifth embodiment differs from the client apparatus 100 in the first to third embodiments in that a sequence information generator 307 for generating sequence information is added and that the determiner 111 is replaced with a determiner 311. The sequence information is information identifying a chronological position at which data is stored in the storage device. Examples of the sequence information include time stamps and serial numbers. As shown in Fig. 9, a memory 205 in the storage device 400 of the fifth embodiment has areas for storing sequence information G and encrypted sequence information G'.

### [Initial registration process]

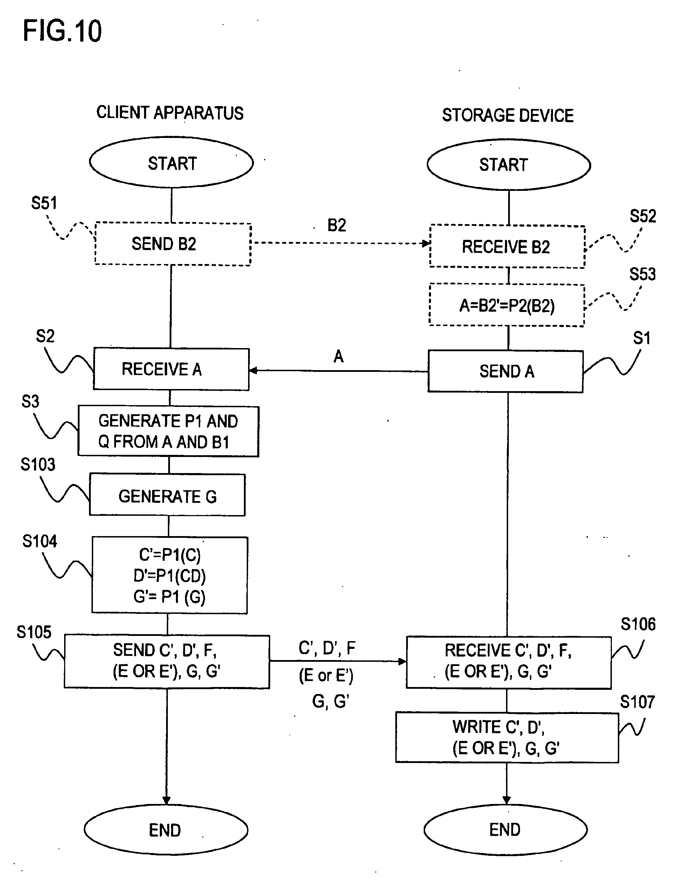

Fig. 10 is a flowchart showing a main processing flow in an initial registration process of the fifth embodiment.

First, steps S1 to S3 are performed as in the first embodiment. Alternatively, steps S51 to S53 and steps S 1 to S3 are performed as in the second embodiment. Then, the sequence information generator 307 in the client apparatus 300 generates an initial value of sequence information G and sends it to the sender 101 and the encryptor 104 (step S103). If the sequence information G is a time stamp, the initial value of the sequence information G is the current time. If the sequence information G is a serial number, the initial value of the sequence information G is '1'.

The encryptor 104 encrypts the client-apparatus-specific information D, the registration information C, and the sequence information G separately with the encryption key P1 to generate encrypted client-apparatus-specific information D', encrypted registration information C', and encrypted sequence information G'. More specifically, the encryptor 104 generates these pieces of information by performing operations expressed as D' = P1(D), C' = P1(C), and G' = P1(G), respectively (step S104). The encrypted client-apparatus-specific information D', the encrypted registration information C', and the encrypted sequence information G' are sent to the sender 101. The display information F and either the client-apparatus identification information E or the encrypted information E' are also sent to the sender 101 as necessary. The sender 101 sends the encrypted client-apparatus-specific information D', the encrypted registration information C', the encrypted sequence information G', and the non-encrypted sequence information G (as well as the display information F and either the client-apparatus identification information E or the encrypted information E', if necessary) with an initial registration request signal (not shown), to the storage device 400 (step S 105). The receiver 202 in the storage device 400 receives these pieces of information (step S106). The encrypted client-apparatus-specific information D', the encrypted registration information C', the encrypted sequence information G', and the non-encrypted sequence information G (as well as the display information F and either the client-apparatus identification information E or the encrypted information E', if necessary) are sent to the writer 204. The writer 204 stores these pieces of information in the memory 205 in association with each other (step S107).

### [Inquiry process]

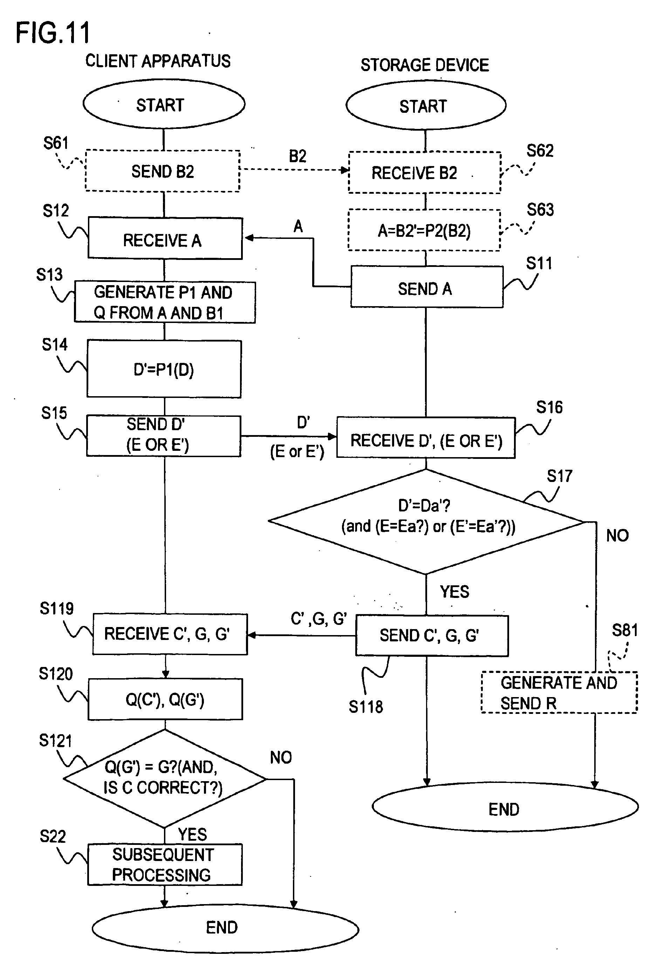

Fig. 11 is a flowchart showing a main processing flow in an inquiry process of the fifth embodiment.

Steps S11 to S17 and S81 are performed as in the first or third embodiment. Alternatively, step S61 to S63, S11 to S17, and S81 are performed as in the second or third embodiment. If it is decided in a judgment made as in any of the first to third embodiments that the client apparatus 300 is the right client apparatus that has performed the initial registration process, the encrypted registration information C', the sequence information G, and the encrypted sequence information G' stored in the memory 205 in association with the encrypted client-apparatus-specific information D' corresponding to the client apparatus 300 is sent to the sender 201. The sender 201 sends the information C', the information G, and the information G' to the client apparatus 300 (step S118).

The receiver 102 of the client apparatus 300 receives the encrypted registration information C', the sequence information G, and the encrypted sequence information G' (step S119), the information C' and the information G' are input to the decryptor 105, and the information G is sent to the determiner 311. The decryptor 105 decrypts the encrypted registration information C' and the encrypted sequence information G' separately with the decryption key Q generated in step S 13 of the inquiry process to generate decrypted registration information C = Q(C') and decrypted sequence information G = Q(G') (step S120).

The decrypted registration information C = Q(C') and the decrypted sequence information G = Q(G') are input to the determiner 311. The determiner 311 judges whether the decrypted sequence information G = Q(G') matches the sequence information G received by the receiver 102, and, if the information is the same, certifies that the encrypted registration information C' is right (step S121). If it is decided that the encrypted registration information C' is right, the decrypted registration information C is sent to the subsequent processor 112, and the subsequent processing is executed (step S22). If it is decided that the encrypted registration information C' is not right, the processing terminates without performing the subsequent processing. As in the first embodiment, the determiner 311 may also judge whether the format of the registration information C is correct, and the subsequent processing may be executed only when the format of the registration information C is correct.

With the operation in step S121, the client apparatus 300 can judge whether the sequence information G sent from the storage device 400 is a forgery and can discard the registration information C corresponding to the forged sequence information G.

### [Overwrite process]

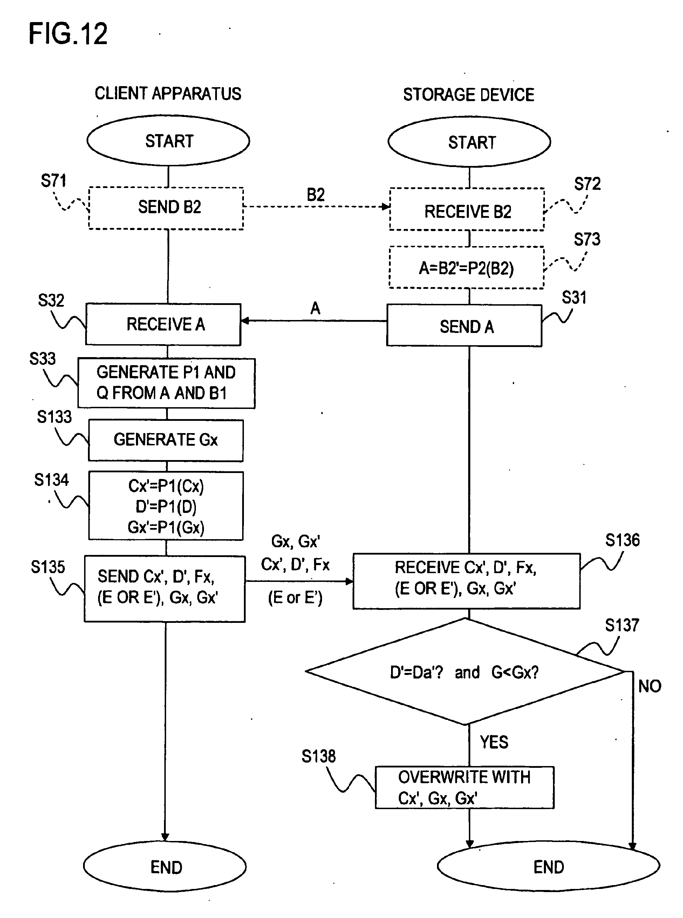

Fig. 12 is a flowchart showing a main processing flow in an overwrite process of the fifth embodiment.

First, steps S31 to S33 are performed as in the first embodiment. Alternatively, steps S71 to S73 and S31 to S33 are performed as in the second embodiment. Then, the sequence information generator 307 in the client apparatus 300 generates new sequence information Gx in accordance with a predetermined rule and sends the information to the sender 101 and the encryptor 104 (step S133). The predetermined rule here specifies that sequence information indicating a chronologically later position in comparison with the latest sequence information G that has already been sent from the client apparatus 300 to the storage device 400 is generated as new sequence information Gx. If the sequence information is a time stamp, the sequence information generator 307 generates the current time as new sequence information Gx. If the sequence information is a serial number, the client apparatus 300 obtains the sequence information G from the storage device 400 by executing the inquiry process as described earlier, and generates sequence information indicating a chronologically later position, as new sequence information Gx. If the client apparatus 300 obtains '8' as the sequence information G from the storage device 400 by executing the inquiry process as described earlier, new sequence information Gx is specified to '9'.

The encryptor 104 encrypts the client-apparatus-specific information D, the update registration information Cx used for overwriting, and the new sequence information Gx separately with the encryption key P1 to generate encrypted client-apparatus-specific information D', encrypted registration information Cx', and encrypted sequence information Gx'. More specifically, the encryptor 104 generates the information by executing the operations expressed as D' = P1(D), Cx' = P1(Cx), and Gx' = P1(Gx), respectively (step S134). The encrypted client-apparatus-specific information D', the encrypted registration information Cx', and the encrypted sequence information Gx' are sent to the sender 101. The display information F and either the client-apparatus identification information E or the encrypted information E' are also sent to the sender 101, when necessary. The sender 101 sends the encrypted client-apparatus-specific information D', the encrypted registration information Cx', the encrypted sequence information Gx', and the non-encrypted sequence information Gx (as well as the display information F and either the client-apparatus identification information E or the encrypted information E', if necessary) with an initial registration request signal (not shown), to the storage device 400 (step S135). The receiver 202 in the storage device 400 receives these pieces of information (step S136).

The encrypted client-apparatus-specific information D' and the non-encrypted sequence information Gx are sent to the determiner 203. Each encrypted client-apparatus-specific information Da' stored in the memory 205 is also input to the determiner 203.

The determiner 203 judges whether any encrypted client-apparatus-specific information Da' stored in the memory 205 matches the received encrypted client-apparatus-specific information D'. The encrypted client-apparatus-specific information Da' stored in the memory 205 has been received in the initial registration process (step S 106 in Fig. 10) and stored in the memory 205, as described earlier. If the determiner 203 judges that any information Da' matches the information D', the determiner 203 next reads the non-encrypted sequence information G stored in the memory 205 in association with the information Da' matching the information D'. The determiner 203 compares the sequence information G with the new sequence information Gx and judges whether the sequence information G indicates a chronologically earlier position in comparison with the new sequence information Gx (step S137).

If it is judged that the sequence information G indicates a chronologically earlier position in comparison with the new sequence information Gx, the encrypted registration information Cx', the sequence information Gx, and the encrypted sequence information Gx' are sent to the writer 204. The writer 204 overwrites the encrypted registration information C' corresponding to the encrypted client-apparatus-specific information Da', the sequence information G, and the encrypted sequence information G' with the encrypted registration information Cx', the sequence information Gx, and the encrypted sequence information Gx', respectively (step S138). If any information Da' does not match the information D' or if it is judged in step S137 that the sequence information G indicates the chronologically same position or a later position in comparison with the new sequence information Gx, the controller 220 terminates the processing without overwriting the information.

Examples of the judgment in step S137 will now be described.

### [Example 1]Using a time stamp as sequence information

If the sequence information G stored in the memory 205 is 2007/11/02/10:23:30 and if the new sequence information Gx sent from the client apparatus 300 is 2007/11/02/10:19:30, overwriting is not allowed. If the new sequence information Gx sent from the client apparatus 300 is 2007/11/02/10:23:30, overwriting is not allowed. If the new sequence information Gx sent from the client apparatus 300 is 2007/11/03/10:30:30, overwriting is allowed.

### [Example 2] Using a serial number as sequence information

If the sequence information G stored in the memory 205 is '8' and if the new sequence information Gx sent from the client apparatus 300 is '7', overwriting is not allowed. If the new sequence information Gx sent from the client apparatus 300 is '8', overwriting is not allowed. If the new sequence information Gx sent from the client apparatus 300 is '9', overwriting is allowed.

If the attacker tries to store encrypted past registration information obtained by skimming in the storage device, overwriting is not allowed because the sequence information G does not satisfy the necessary requirements in step S137. As has been described earlier, the necessary requirements in step S137 include conditions in which any encrypted client-apparatus-specific information Da' stored in the memory 205 matches the received encrypted client-apparatus-specific information D' and in which the sequence information G indicates a chronologically earlier position in comparison with the new sequence information Gx.

The attacker can store encrypted past registration information, altered sequence information Gx, and the encrypted sequence information G' in the storage device in such a manner that the necessary requirements in step S137 are satisfied. However, because the altered sequence information Gx does not match the information obtained by decrypting the encrypted sequence information G', this fraudulent operation can be found through the judgment in step S121 in the inquiry process.

The fifth embodiment is provided to handle such fraudulent operations that information is overwritten at least once after the initial registration process and that the attacker tries to store old data before overwriting in the storage device again by using data obtained by skimming. Therefore, the fifth embodiment becomes effective in the following processing flow: The initial registration process of the fifth embodiment is performed; the overwrite process of the fifth embodiment is performed at least once; and then, the inquiry process of the fifth embodiment is performed, for example. The sequence information G of the client apparatus performing the initial registration in the fifth embodiment will be referred to as first sequence information. The sequence information Gx of the client apparatus performing the inquiry process or overwrite process will be referred to as second sequence information.

### [Sixth Embodiment]

A sixth embodiment of the present invention will be described. The sixth embodiment is a modification of the fifth embodiment. The sixth embodiment differs from the fifth embodiment in that the registration information C and the sequence information G are not encrypted separately but that a connect bit value C|G is encrypted. The following description will focus on points where the sixth embodiment differs from the fifth embodiment.

### [Structure]

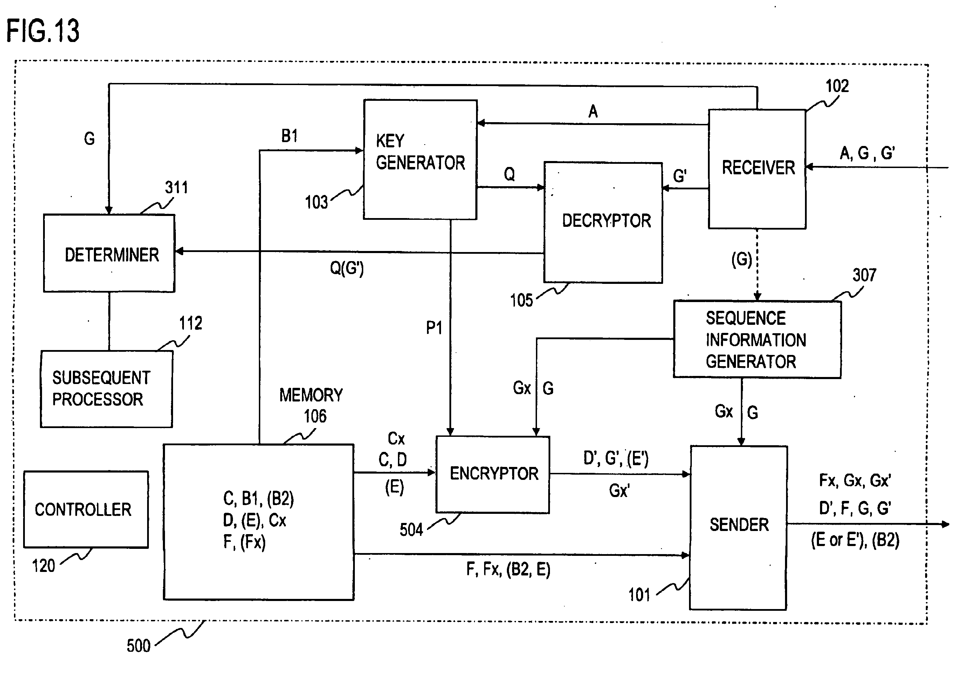

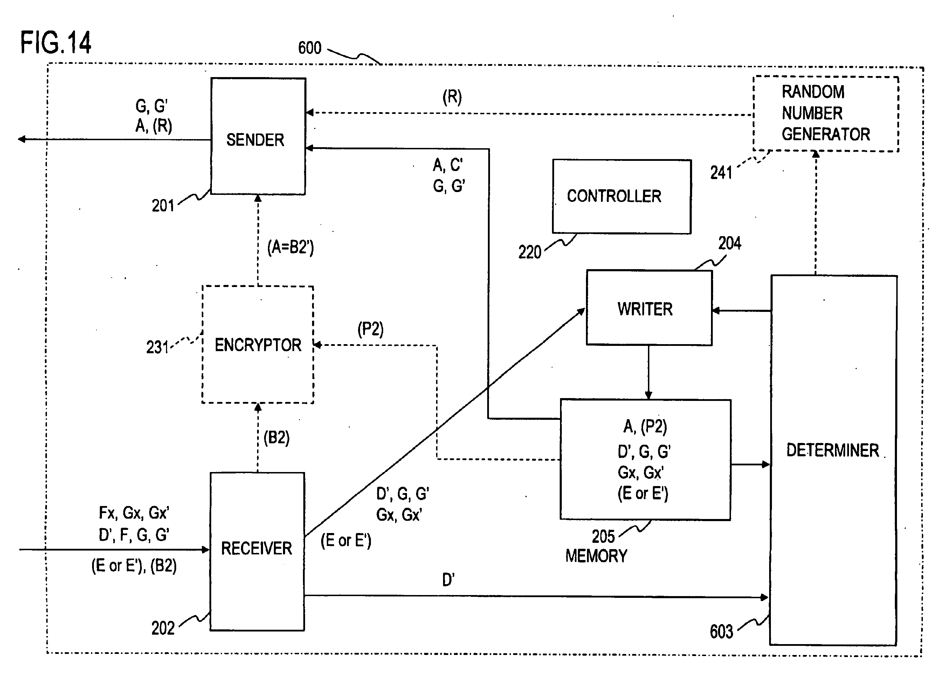

Fig. 13 is a block diagram showing an example functional structure of a client apparatus 500 in the sixth embodiment. Fig. 14 is a block diagram showing an example functional structure of a storage device 600 in the sixth embodiment.

As shown in Fig. 13, the client apparatus 500 in the sixth embodiment differs from the client apparatus 300 in the fifth embodiment in that the encryptor 104 is replaced with an encryptor 504. The encryptor 504 differs from the encryptor 104 in that it can encrypt a connect bit value of a plurality of data items.

### [Initial registration process]

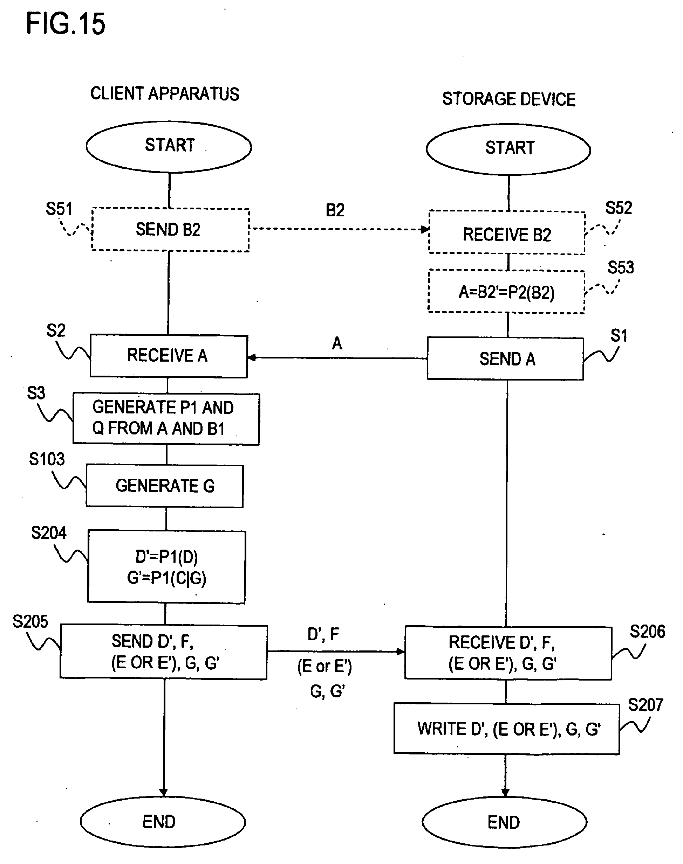

Fig. 15 is a flowchart showing a main processing flow in an initial registration of the sixth embodiment.

First, steps S1 to S3 are performed as in the first embodiment. Alternatively, steps S51 to S53 and S 1 to S3 are performed as in the second embodiment. Then, the sequence information G is generated (step S103) as in the fifth embodiment. The encryptor 504 next encrypts the client-apparatus-specific information D with the encryption key P1 to generate encrypted client-apparatus-specific information D', and also encrypts a connect bit value C|G of the registration information C and the sequence information G with the encryption key P1, to generate encrypted sequence information G' = P1(C|G), which can function also as the encrypted registration information C' (step S204). The encryption makes it harder to forge the sequence information G The information of the bit connecting position of the registration information C and the sequence information G will be needed at decryption. The bit connecting position of the registration information C and the sequence information G may be set to a fixed value beforehand, or this position information may be included in header information or the like. The encrypted client-apparatus-specific information D' and the encrypted sequence information G' that can function also as the encrypted registration information C' are sent to the sender 101. The display information F and either the client-apparatus identification information E or the encrypted information E', which has been described earlier, are also sent to the sender 101, if necessary. The sender 101 sends the encrypted client-apparatus-specific information D', the encrypted sequence information G' that can function also as the encrypted registration information C', and the non-encrypted sequence information G (as well as the display information F and either the client-apparatus identification information E or the encrypted information E' described earlier, if necessary) together with an initial registration request signal (not shown), to the storage device 600 (step S205). The receiver 202 in the storage device 600 receives these pieces of information (step S206). The encrypted client-apparatus-specific information D', the encrypted sequence information G' that can function also as the encrypted registration information C', and the non-encrypted sequence information G (as well as the display information F and either the client-apparatus identification information E or the encrypted information E' described earlier, when necessary) are sent to the writer 204. The writer 204 stores these pieces of information in the memory 205 in association with each other (step S207).

### [Inquiry process]

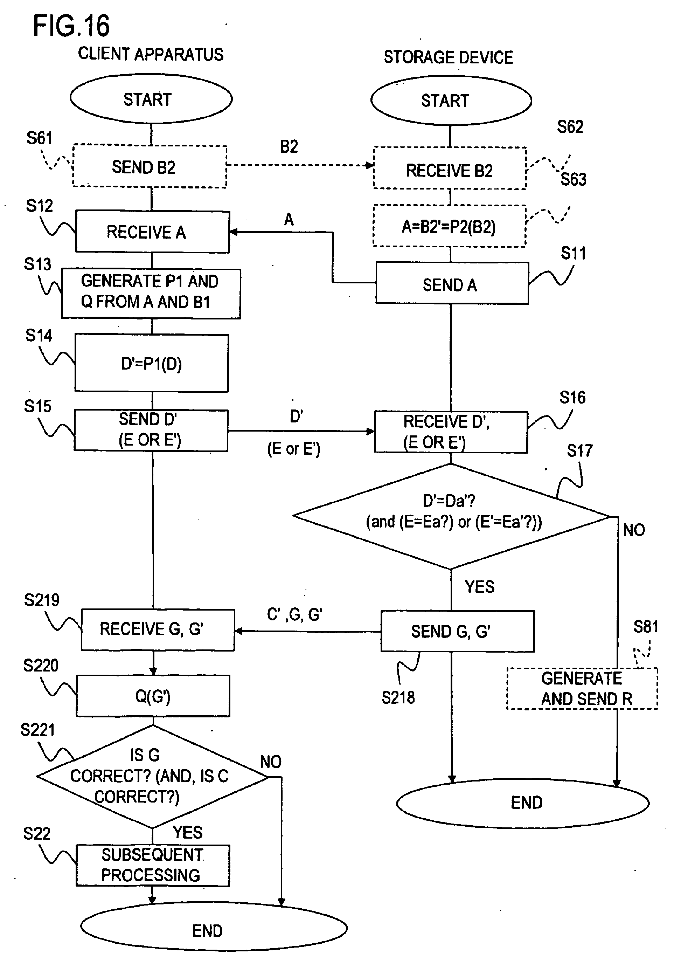

Fig. 16 is a flowchart showing a main processing flow in an inquiry process of the sixth embodiment.

First, steps S 11 to S 17 and S81 are performed as in the first or third embodiment. Alternatively, steps S61 to S63, S11 to S17, and S81 are performed as in the second or third embodiment. Then, if it is decided in a judgment as made in any of the first to third embodiments that the client apparatus 500 is the right client apparatus that has performed the initial registration process, the sequence information G and the encrypted sequence information G' that can function also as the encrypted registration information C', both stored in the memory 205 in association with the encrypted client-apparatus-specific information D' corresponding to the client apparatus 500 are sent to the sender 201. The sender 201 sends the information G and G' to the client apparatus 500 (step S218).

The receiver 102 in the client apparatus 500 receives the sequence information G and the encrypted sequence information G' that can function also as the encrypted registration information C' (step S219). The information G' is input to the decryptor 105, and the information G is sent to the determiner 311. The decryptor 105 decrypts the encrypted sequence information G' that can function also as the encrypted registration information C', with the decryption key Q generated in step S13 of the inquiry process, to generate a decrypted connect bit value Q(G') = C|G (step S220). The decrypted registration information C and the decrypted sequence information G separated from Q(G') are input to the determiner 311.

The determiner 311 judges whether the decrypted sequence information G matches the sequence information G received by the receiver 102. If the information is the same, it is decided that the encrypted sequence information G' that can function also as the encrypted registration information C' is right (step S221). If it is decided that the encrypted sequence information G' that can function also as the encrypted registration information C' is right, the decrypted registration information C is sent to the subsequent processor 112, and the subsequent processing is executed (step S22). If it is decided that the encrypted sequence information G' that can function also as the encrypted registration information C' is not right, the processing terminates, and the subsequent processing is not executed. As in the first embodiment, the determiner 311 may judge further whether the format of the registration information C is correct, and the subsequent processing may be executed only when the format is right.

### [Overwrite process]

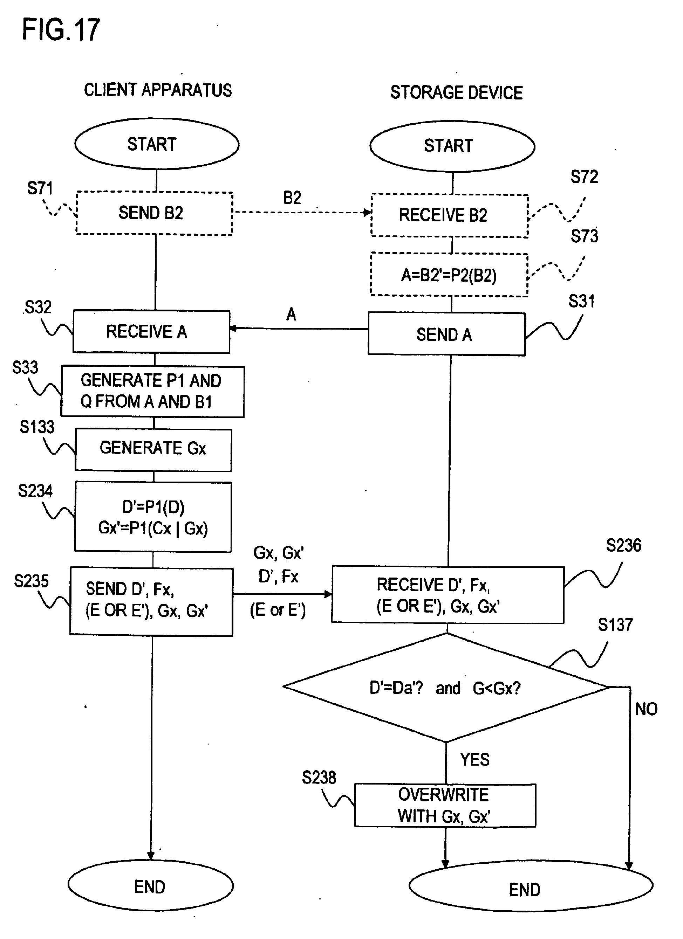

Fig. 17 is a flowchart showing a main processing flow in an overwrite process of the sixth embodiment.

First, steps S31 to S33 are performed as in the first embodiment. Alternatively, steps S71 to S73 and S31 to S33 are performed as in the second embodiment. Then, as in the fifth embodiment, the sequence information generator 307 in the client apparatus 500 generates new sequence information Gx in accordance with a predetermined rule and sends the information to the sender 101 and the encryptor 504 (step S133). The encryptor 504 encrypts the client-apparatus-specific information D with the encryption key P1 to generate encrypted client-apparatus-specific information D', and encrypts a connect bit value Cx|Gx of the registration information Cx and the sequence information Gx with the encryption key P1, to generate encrypted sequence information Gx' = P 1(Cx|Gx) that can function also as the encrypted registration information Cx' (step S234). The encrypted client-apparatus-specific information D' and the encrypted sequence information Gx' that can function also as the encrypted registration information Cx' are sent to the sender 101. The display information F and either the client-apparatus identification information E or the encrypted information E' described above are also sent to the sender 101, if necessary. The sender 101 sends the encrypted client-apparatus-specific information D', the encrypted sequence information Gx' that can function also as the encrypted registration information Cx', and the non-encrypted sequence information Gx (as well as the display information F and either the client-apparatus identification information E or the encrypted information E' described above, if necessary) together with an initial registration request signal (not shown), to the storage device 600 (step S235). The receiver 202 in the storage device 600 receives these pieces of information (step S236).

A judgment is made as in step S 137 of the fifth embodiment. If it is judged that the sequence information G indicates a chronologically earlier position in comparison with the new sequence information Gx, the sequence information Gx and the encrypted sequence information Gx' that can function also as the encrypted registration information Cx' are sent to the writer 204. The writer 204 overwrites the encrypted sequence information G' that can function also as the encrypted registration information Cx' corresponding to the matching encrypted client-apparatus-specific information Da' and the sequence information G with the encrypted sequence information Gx' that can function also as the encrypted registration information Cx' and the sequence information Gx, respectively (step S238). If it is judged in step S137 that no information Da' matches the information D' or that the sequence information G indicates chronologically the same position as the new sequence information Gx or a later position in comparison with the sequence information Gx, the controller 220 terminates the processing without overwriting the information.

Like the fifth embodiment, the sixth embodiment becomes effective in the following processing flow: The initial registration process of the sixth embodiment is performed; the overwrite process of the sixth embodiment is performed once at least; and then, the inquiry process of the sixth embodiment is performed.

### [Seventh Embodiment]

A seventh embodiment of the present invention will be described. The seventh embodiment is a modification of the fifth embodiment. The seventh embodiment differs from the fifth embodiment in that the registration information is not encrypted. The following description will focus on points where the seventh embodiment differs from the fifth embodiment.

### [Structure]

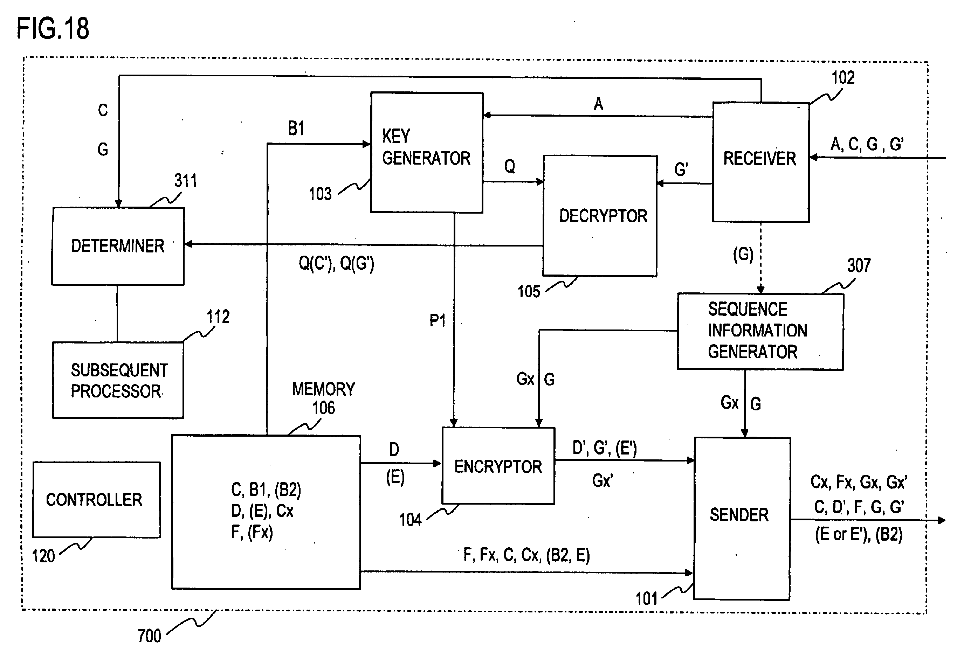

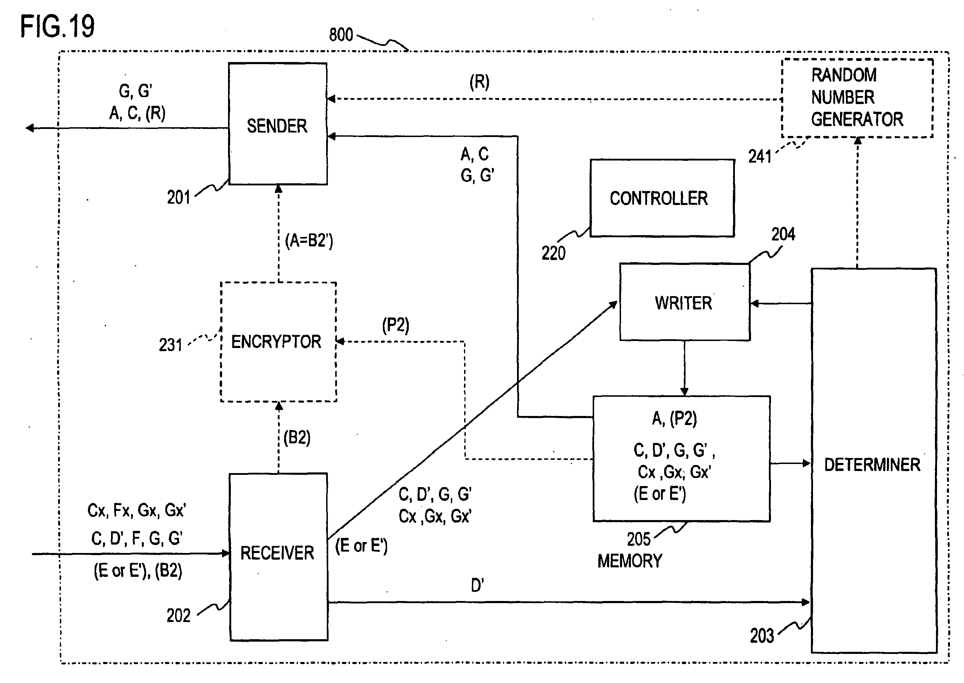

Fig. 18 is a block diagram showing an example functional structure of a client apparatus 700 in the seventh embodiment. Fig. 19 is a block diagram showing an example functional structure of a storage device 800 in the seventh embodiment. The seventh embodiment differs from the fifth embodiment in that the encryptor 104 in the client apparatus 700 does not encrypt the registration information.

### [Initial registration process]

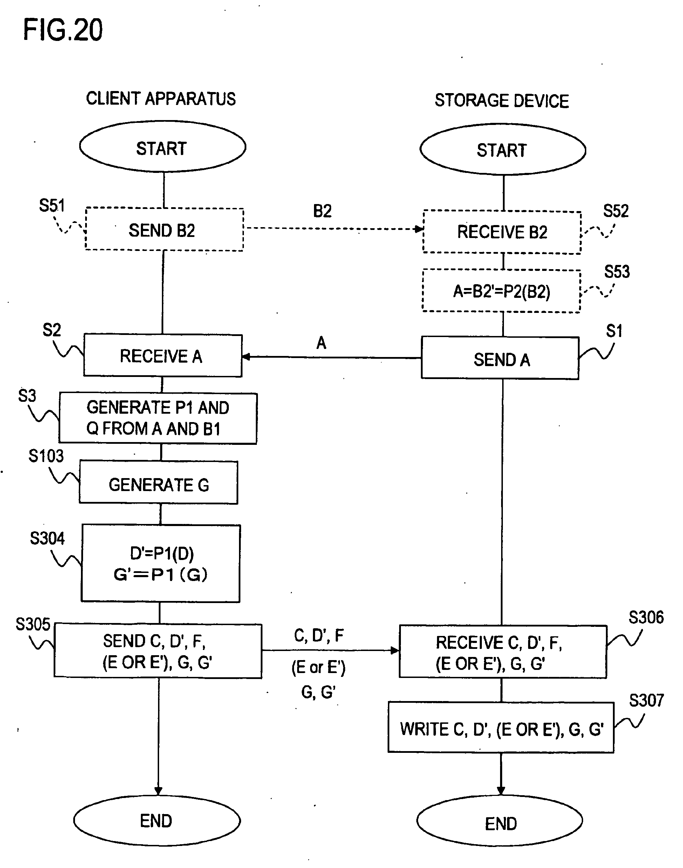

Fig. 20 is a flowchart showing a main processing flow in an initial registration process of the seventh embodiment.

First, steps S 1 to S3 are performed as in the first embodiment. Alternatively, steps S51 to S53 and S 1 to S3 are performed as in the second embodiment. The sequence information generator 307 in the client apparatus 700 next generates an initial value of the sequence information G and sends it to the sender 101 and the encryptor 104 (step S103).

The encryptor 104 encrypts the client-apparatus-specific information D and the sequence information G separately with the encryption key P1 to generate encrypted client-apparatus-specific information D' and encrypted sequence information G' (step S304). The encrypted client-apparatus-specific information D' and the encrypted sequence information G' are sent to the sender 101. The registration information C read from the memory 106 is also sent to the sender 101. The display information F and either the client-apparatus identification information E or the encrypted information E' described earlier are also sent if necessary. The sender 101 sends the encrypted client-apparatus-specific information D', the non-encrypted registration information C, the encrypted sequence information G', and the non-encrypted sequence information G (as well as the display information F and either the client-apparatus identification information E or the encrypted information E' described earlier, if necessary), with an initial registration request signal (not shown), to the storage device 800 (step S305). The receiver 202 in the storage device 800 receives these pieces of information (step S306). The encrypted client-apparatus-specific information D', the non-encrypted registration information C, the encrypted sequence information G', and the non-encrypted sequence information G (as well as the display information F and either the client-apparatus identification information E or the encrypted information E' described earlier, if necessary) are sent to the writer 204. The writer 204 stores these pieces of information in the memory 205 in association with each other (step S307).

### [Inquiry process]

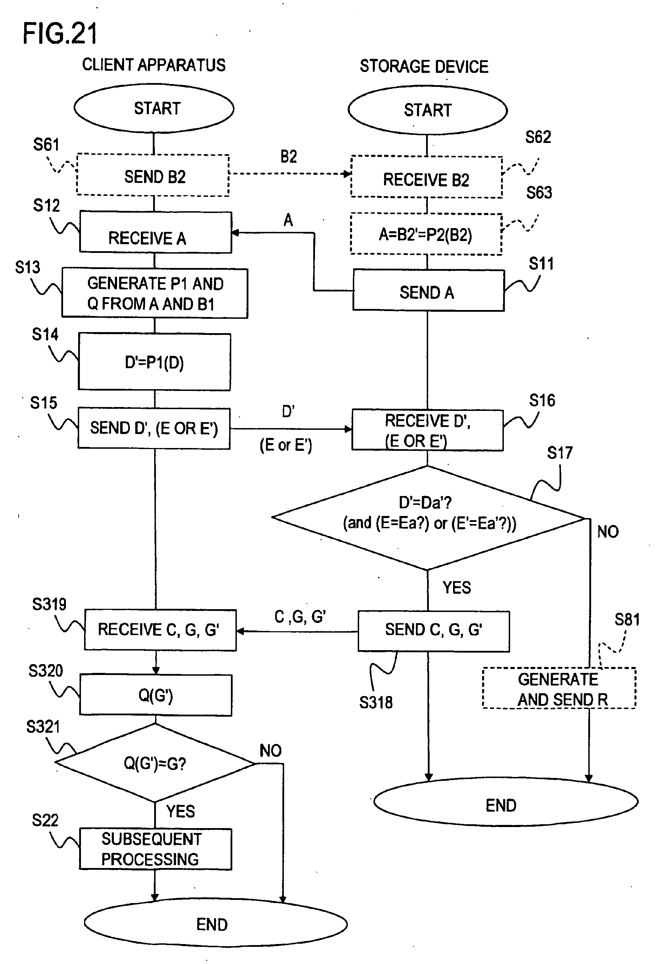

Fig. 21 is a flowchart showing a main processing flow in an inquiry process of the seventh embodiment.

First, steps S11 to S17 and S81 are performed as in the first or third embodiment. Alternatively, steps S61 to S63, S 11 to S 17, and S81 are performed as in the second or third embodiment. If it is decided in a judgment as made in any of the first to third embodiments that the client apparatus 700 is the right client apparatus that has performed the initial registration process, the registration information C, the sequence information G, and the encrypted sequence information G' all stored in the memory 205 in association with the encrypted client-apparatus-specific information D' corresponding to the client apparatus 700 are sent to the sender 201. The sender 201 sends the information C, the information G, and the information G' to the client apparatus 700 (step S318).

The receiver 102 in the client apparatus 700 receives the registration information C, the sequence information G, and the encrypted sequence information G' (step S319). The information G' is input to the decryptor 105, and the information C and the information G are sent to the determiner 311. The decryptor 105 decrypts the encrypted sequence information G' with the decryption key Q generated in step S13 of the inquiry process, to generate decrypted sequence information G = Q(G') (step S320).

The decrypted sequence information G = Q(G') is input to the determiner 111. The determiner 111 judges whether the decrypted sequence information G = Q(G') matches the sequence information G received by the receiver 102. If the information is the same, it is decided that the registration information C is right (step S321). If it is decided that the registration information C is right, the registration information C is sent to the subsequent processor 112, where the subsequent processing is executed (step S22). If it is judged that the registration information C is not right, the processing is terminated, and the subsequent processing is not executed.

### [Overwrite process]

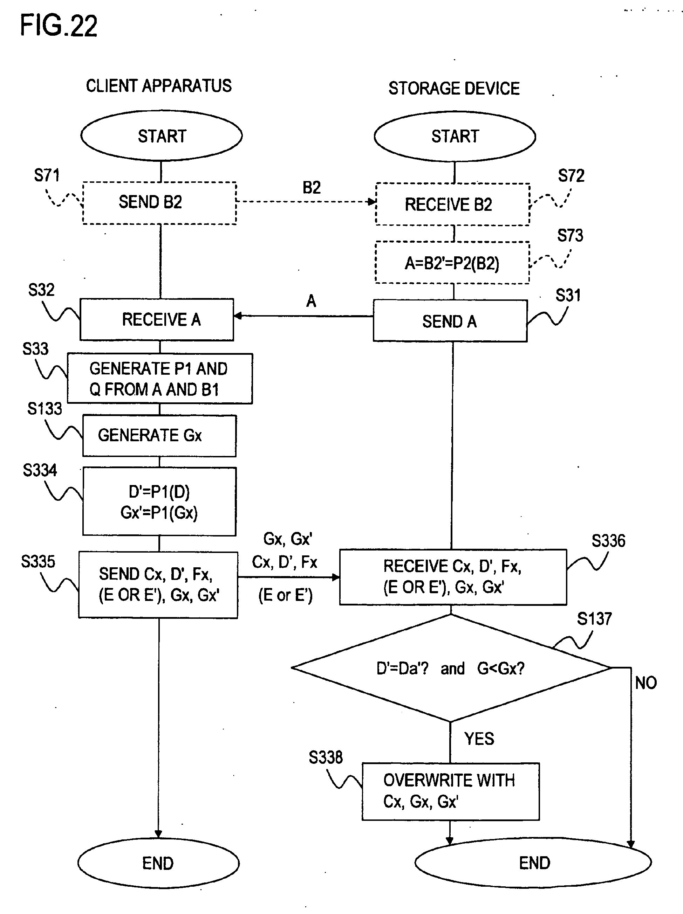

Fig. 22 is a flowchart showing a main processing flow in an overwrite process of the seventh embodiment.

First, steps S31 to S33 are performed as in the first embodiment. Alternatively, steps S71 to S73 and S31 to S33 are performed as in the second embodiment. Then, the sequence information generator 307 in the client apparatus 700 generates new sequence information Gx in accordance with a predetermined rule and sends the information to the sender 101 and the encryptor 104 (step S133).

The encryptor 104 encrypts the client-apparatus-specific information D and the new sequence information Gx separately with the encryption key P1 to generate encrypted client-apparatus-specific information D' and encrypted sequence information Gx' (step S334). The encrypted client-apparatus-specific information D' and the encrypted sequence information Gx' are sent to the sender 101. The registration information Cx read from the memory 106 is also sent to the sender 101. The display information F and either the client-apparatus identification information E or the encrypted information E' are also sent when necessary. The sender 101 sends the encrypted client-apparatus-specific information D', the non-encrypted registration information Cx, the encrypted sequence information Gx', and the non-encrypted sequence information Gx (as well as the display information F and either the client-apparatus identification information E or the encrypted information E', if necessary) with an initial registration request signal (not shown) to the storage device 800 (step S335). The receiver 202 in the storage device 800 receives these pieces of information (step S336).

A judgment is made as in step S137 of the fifth embodiment. If it is judged that the sequence information G indicates a chronologically earlier position in comparison with the new sequence information Gx, the registration information Cx, the sequence information Gx, and the encrypted sequence information Gx' are sent to the writer 204. The writer 204 overwrites the registration information C corresponding to the matching encrypted client-apparatus-specific information Da', the sequence information G, and the encrypted sequence information G' with the registration information Cx, the sequence information Gx, and the encrypted sequence information Gx' respectively (step S338). If it is judged in step S137 that no information Da' matches the information D' or that the sequence information G indicates chronologically the same position as the new sequence information Gx or a later position, the controller 220 terminates the processing without overwriting the information.

Like the fifth embodiment, the seventh embodiment becomes effective in the following processing flow: The initial registration process of the seventh embodiment is performed; the overwrite process of the seventh embodiment is performed at least once; and then, the inquiry process of the seventh embodiment is performed.

### [Preferable Applications]

Preferable applications of the present invention will be described next. The initial registration process, the inquiry process, and the overwrite process have been described separately above. In the applications described below, the initial registration process, the inquiry process, and the overwrite process will be described as a single series of processes, the registration information C is handled as a point, and the storage device 200 is a IC chip or a smart card incorporated in a mobile phone. In the preferable applications, the registration information C or the encrypted information C' is stored (1) in a storage device and a central server apparatus (not shown) or (2) only in a storage device. In the case (1), the storage device and the central server apparatus are always synchronized in terms of the registration information C or the encrypted information C'. In the overwrite process, the registration information C or the encrypted information C' in the central server apparatus is overwritten. The registration information C or the encrypted information C' in the storage device is overwritten with the overwritten registration information C or the encrypted information C' in the central server apparatus. Since a third party cannot overwrite the registration information C in the central server apparatus, the client apparatus and the storage device can exchange the point information while performing authentication. In the case (2), the level of security is lower in comparison with the case (1), but the point information can be exchanged between the storage device and the client apparatus at low cost.

### [Program and Recording Medium]

When the structure described above is implemented by a computer, the function that should be implemented by each unit can be expressed by a program. When the program is executed on the computer, the above-described processing functions are implemented on the computer.

The program describing the operation can be recorded on a computer-readable recording medium. The computer-readable recording medium can be a magnetic recording apparatus, an optical disk, a magneto-optical recording medium, a semiconductor memory, or the like.

The program is distributed by selling, transferring, or lending a transportable recording medium such as a DVD or a CD-ROM, on which the program is recorded. The program may also be stored in a storage device of a server computer and may be distributed by sending the program from the server computer to another computer through a network.

The computer that executes the program stores the program temporarily in its own storage device. When the processing is executed, the computer reads the program stored in its own storage device and executes the processing in accordance with the read program. In another program execution pattern, the processing determined by a received program may be executed each time the program is sent from the server computer to the local computer.

In the embodiments described above, the apparatus is implemented by executing a predetermined program on the computer. At least a part of the processing may be implemented by hardware. The embodiments described above will not confine the present invention. Modifications can be made within the scope of the present invention.

### INDUSTRIAL APPLICABILITY

An example of the application of the present invention is a system in which coupon data issued by a plurality of shops are stored in a shared IC chip.

## Claims

1. A data keeping method comprising the steps of:
a) sending first storage-device-specific information specific to a storage device to a first client apparatus, from sender (201) of the storage device (200, 400, 800);
b) receiving the first storage-device-specific information by receiver (102) of the first client apparatus (100, 300, 700);
c) generating a first encryption key from the first storage-device-specific information and first client-apparatus key generation information, in key generator (103) of the first client apparatus (100, 300, 700);
d) generating first encrypted client-apparatus-specific information by encrypting first client-apparatus-specific information specific to the first client apparatus, with the first encryption key, in encryptor (104) of the first client apparatus (100, 300, 700);
e) sending the first encrypted client-apparatus-specific information to the storage device, from sender (101) of the first client apparatus (100, 300, 700);
f) receiving the first encrypted client-apparatus-specific information by receiver (202) of the storage device (200,400, 800);
g) storing the first encrypted client-apparatus-specific information in memory (205) of the storage device (200,400, 800);
h) sending second storage-device-specific information specific to the storage device to a second client apparatus, from the sender (201) of the storage device (200, 400, 800);
i) receiving the second storage-device-specific information by receiver (102) of the second client apparatus (100, 300, 700);
j) generating a second encryption key from the second storage-device-specific information and second client-apparatus key generation information, in key generator (103) of the second client apparatus (100, 300, 700);
k) generating second encrypted client-apparatus-specific information by encrypting second client-apparatus-specific information specific to the second client apparatus, with the second encryption key, in encryptor (104) of the second client apparatus (100, 300, 700);
l) sending the second encrypted client-apparatus-specific information to the storage device, from sender (101) of the second client apparatus (100, 300, 700);
m) receiving the second encrypted client-apparatus-specific information, by the receiver (202) of the storage device (200); and
n) judging in determiner (203) of the storage device (200, 400, 800) whether or not necessary requirements are satisfied, including such a condition that the second encrypted client-apparatus-specific information matches the first encrypted client-apparatus-specific information stored in the memory, and, when the necessary requirements are satisfied, identifying the second client apparatus as the first client apparatus by considering that the first storage-device-specific information, the first client-apparatus key generation information, and the first client-apparatus-specific information match the second storage-device-specific information, the second client-apparatus key generation information, and the second client-apparatus-specific information, respectively.

2. The data keeping method according to Claim 1, further comprising the steps of:
generating first encrypted registration information, by encrypting first registration information with the first encryption key, in the encryptor of the first client apparatus;
sending the first encrypted registration information to the storage device, from the sender of the first client apparatus;
receiving the first encrypted registration information, by the receiver of the storage device; and
storing the first encrypted registration information in association with the first encrypted client-apparatus-specific information, in the memory of the storage device;
the first client-apparatus key generation information comprising secret information specified independently in the first client apparatus; and
the second client-apparatus key generation information comprising secret information specified independently in the second client apparatus.

3. The data keeping method according to Claim 2, wherein the step j) comprises the step of generating a decryption key corresponding to the second encryption key, from the second storage-device-specific information and the second client-apparatus key generation information, in the key generator of the second client apparatus;
the data keeping method further comprising the steps of:
sending the first encrypted registration information stored in association with the first encrypted client-apparatus-specific information in the memory, from the sender of the storage device to the second client apparatus, when the second client apparatus is identified as the first client apparatus in the step n);
receiving the first encrypted registration information, by the receiver of the second client apparatus; and
decrypting the first encrypted registration information, using the decryption key, in decryptor (104) of the second client apparatus.

4. The data keeping method according to Claim 3, further comprising the step of sending a random number to the second client apparatus, from the sender of the storage device, when the second client apparatus is not identified as the first client apparatus, as a result of the judgment made in the step n).

5. The data keeping method according to Claim 2, wherein the step (j) comprises the step of generating a decryption key corresponding to the second encryption key, from the second storage-device-specific information and the second client-apparatus key generation information, in the key generator of the second client apparatus;
the step k) further comprises the step of generating second encrypted registration information by encrypting second registration information with the second encryption key, in the encryptor of the second client apparatus;
the step l) further comprises the step of sending the second encrypted registration information to the storage device, from the sender of the second client apparatus; and
the step m) further comprises the step of receiving the second encrypted registration information, by the receiver of the storage device;
the data keeping method further comprising the step of overwriting the first encrypted registration information stored in association with the first encrypted client-apparatus-specific information in the memory, with the second encrypted registration information, in writer of the storage device, when the second client apparatus is identified as the first client apparatus in the step n).

6. The data keeping method according to Claim 2, further comprising the step of generating first sequence information identifying a chronological position at which the first encrypted registration information is stored in the storage device, by sequence information generator (307) of the first client apparatus (300);
the step d) further comprising the step of generating first encrypted sequence information by encrypting the first sequence information with the first encryption key, in the encryptor of the first client apparatus (300);
the step e) further comprising the step of sending the first sequence information and the first encrypted sequence information to the storage device, from the sender of the first client apparatus (300);
the step f) further comprising the step of receiving the first sequence information and the first encrypted sequence information, by the receiver of the storage device (400); and
the step g) further comprising the step of storing the first sequence information and the first encrypted sequence information in association with the first encrypted registration information, in the memory of the storage device (400);
the data keeping method further comprising the step of generating second sequence information in sequence information generator of the second client apparatus (300),
the step k) further comprising the steps of generating second encrypted registration information by encrypting second registration information with the second encryption key, and generating second encrypted sequence information by encrypting the second sequence information with the second encryption key, in the encryptor of the second client apparatus (300);
the step l) further comprising the step of sending the second encrypted registration information, the second sequence information, and the second encrypted sequence information to the storage device, from the sender of the second client apparatus (300);
the step m) further comprising the step of receiving the second encrypted registration information, the second sequence information, and the second encrypted sequence information, by the receiver of the storage device (400);
the step n) further comprising the step of judging in the determiner (403) of the storage device (400) whether or not the first sequence information stored in association with the first encrypted client-apparatus-specific information in the memory indicates a chronologically earlier position than the second sequence information;
the necessary requirements further comprising a condition in which the first sequence information indicates a chronologically earlier position than the second sequence information;
the data keeping method further comprising the step of overwriting the first encrypted registration information, the first sequence information, and the first encrypted sequence information stored in association with the first encrypted client-apparatus-specific information in the memory, with the second encrypted registration information, the second sequence information, and the second encrypted sequence information, respectively, in the writer of the storage device when the second client apparatus is identified as the first client apparatus in the step n).

7. The data keeping method according to Claim 6, wherein the steps h) to n) are executed again after the step of overwriting the first encrypted registration information, the first sequence information, and the first encrypted sequence information with the second encrypted registration information, the second sequence information, and the second encrypted sequence information, respectively; and
the step j) executed again comprises the step of generating a decryption key corresponding to the second encryption key, from the second storage-device-specific information and the second client-apparatus key generation information, in the key generator of the second client apparatus;
the data keeping method further comprising the steps of:
sending the second encrypted registration information, the second sequence information, and the second encrypted sequence information stored in the memory in association with the first encrypted client-apparatus-specific information, from the sender of the storage device to the second client apparatus, when the second client apparatus is identified as the first client apparatus in the step n) executed again;
receiving the second encrypted registration information, the second sequence information, and the second encrypted sequence information, by the receiver of the second client apparatus;
decrypting the second encrypted sequence information with the decryption key, in decryptor of the second client apparatus; and
judging in determiner of the second client apparatus whether or not information obtained by decrypting the second encrypted sequence information matches the second sequence information received by the receiver of the second client apparatus, and, when they match, deciding that the second encrypted registration information is right.

8. The data keeping method according to Claim 1, further comprising the step of generating first sequence information identifying a chronological position at which first registration information is stored in the storage device, in sequence information generator (307) of the first client apparatus (700);
the step d) further comprising the step of generating first encrypted sequence information by encrypting the first sequence information with the first encryption key, in the encryptor of the first client apparatus (700);
the step e) further comprising the step of sending the first registration information, the first sequence information, and the first encrypted sequence information to the storage device, from the sender of the first client apparatus (700);
the step f) further comprising the step of receiving the first registration information, the first sequence information, and the first encrypted sequence information, by the receiver of the storage device (800); and
the step g) further comprising the step of storing the first registration information, the first sequence information, and the first encrypted sequence information, in association with the first encrypted client-apparatus-specific information, in the memory of the storage device (800);
the data keeping method further comprising the step of generating second sequence information in the sequence information generator of the second client apparatus (700);
the step k) further comprising the step of generating second encrypted sequence information by encrypting the second sequence information, using the second encryption key, in the encryptor of the second client apparatus (700);
the step l) further comprising the step of sending second registration information, the second sequence information, and the second encrypted sequence information to the storage device, from the sender of the second client apparatus (700);
the step m) further comprising the step of receiving the second registration information, the second sequence information, and the second encrypted sequence information, by the receiver of the storage device;
the step n) further comprising the step of judging in the determiner of the storage device whether or not the first sequence information stored in association with the first encrypted client-apparatus-specific information in the memory indicates a chronologically earlier position than the second sequence information;
the necessary requirements further comprising a condition in which the first sequence information indicates a chronologically earlier position than the second sequence information;
the data keeping method further comprising the step of overwriting the first registration information, the first sequence information, and the first encrypted sequence information stored in association with the first encrypted client-apparatus-specific information in the memory, with the second registration information, the second sequence information, and the second encrypted sequence information, respectively, in the writer of the storage device, when the second client apparatus is identified as the first client apparatus in the step n);
the first client-apparatus key generation information comprising secret information specified independently in the first client apparatus; and
the second client-apparatus key generation information comprising secret information specified independently in the second client apparatus.

9. The data keeping method according to Claim 8, wherein the steps h) to n) are executed again after the step of overwriting the first registration information, the first sequence information, and the first encrypted sequence information with the second registration information, the second sequence information, and the second encrypted sequence information respectively;
the step j) executed again comprising the step of generating a decryption key corresponding to the second encryption key, from the second storage-device-specific information and the second client-apparatus key generation information, in the key generator of the second client apparatus;
the data keeping method further comprising the steps of:
sending the second registration information, the second sequence information, and the second encrypted sequence information stored in association with the first encrypted client-apparatus-specific information in the memory, from the sender of the storage device to the second client apparatus, when the second client apparatus is identified as the first client apparatus in the step n) executed again;
receiving the second registration information, the second sequence information, and the second encrypted sequence information, by the receiver of the second client apparatus;
decrypting the second encrypted sequence information with the decryption key, in decryptor of the second client apparatus; and
judging in determiner of the second client apparatus whether or not information obtained by decrypting the second encrypted sequence information matches the second sequence information received by the receiver of the second client apparatus, and, when they match, deciding that the second registration information is right.

10. The data keeping method according to Claim 1, further comprising the steps of:
sending third client-apparatus key generation information, which is secret information specified independently in the first client apparatus, to the storage device, from the sender of the first client apparatus;
receiving the third client-apparatus key generation information by the receiver of the storage device;
generating third encrypted client-apparatus key generation information by encrypting the third client-apparatus key generation information with a third encryption key, in the encryptor of the storage device;
sending fourth client-apparatus key generation information, which is secret information specified independently in the second client apparatus, to the storage device, from the sender of the second client apparatus;
receiving the fourth client-apparatus key generation information by the receiver of the storage device; and
generating fourth encrypted client-apparatus key generation information by encrypting the fourth client-apparatus key generation information with a fourth encryption key, in the encryptor of the storage device;
the step a) comprising the step of sending the third encrypted client-apparatus key generation information as the first storage-device-specific information; and
the step h) comprising the step of sending the fourth encrypted client-apparatus key generation information as the second storage-device-specific information.

11. The data keeping method according to Claim 1, wherein the step e) further comprises the step of sending first client-apparatus identification information specific to the first client apparatus to the storage device, from the sender of the first client apparatus;
the step f) further comprises the step of receiving the first client-apparatus identification information by the receiver of the storage device;
the step g) further comprises the step of storing the first client-apparatus identification information in the memory, in association with the first encrypted client-apparatus-specific information;
the step l) further comprises the step of sending second client-apparatus identification information specific to the second client apparatus, to the storage device, from the sender of the second client apparatus;
the step m) further comprises the step of receiving the second client-apparatus identification information by the receiver of the storage device; and
the step n) further comprises the step of judging whether or not the first client-apparatus identification information stored in the memory in association with the first encrypted client-apparatus-specific information matches the second client-apparatus identification information, in the determiner of the storage device;
the necessary requirements further comprising a condition in which the first client-apparatus identification information matches the second client-apparatus identification information.

12. A data keeping system comprising means adapted to perform all of the steps of the method of any one of the claims 1 to 11.

13. A computer program product comprising computer program code means adapted to perform all steps of the method of any one of claims 1 to 11.

## Patentansprüche

1. Datenaufbewahrungsverfahren mit den folgenden Schritten:
a) Senden einer ersten speichervorrichtungsspezifischen Information, die für eine Speichervorrichtung spezifisch ist, an ein erstes Clientgerät vom Sender (201) der Speichervorrichtung (200, 400, 800);
b) Empfangen der ersten speichervorrichtungsspezifischen Information durch den Empfänger (102) des ersten Clientgeräts (100, 300, 700);
c) Erzeugen eines ersten Chiffrierungsschlüssels aus der ersten speichervorrichtungsspezifischen Information und einer ersten Clientgerätschlüssel-Erzeugungsinformation im Schlüsselgenerator (103) des ersten Clientgeräts (100, 300, 700);
d) Erzeugen einer ersten chiffrierten clientgerätspezifischen Information durch Chiffrieren einer ersten clientgerätspezifischen Information, die für das erste Clientgerät spezifisch ist, mit dem ersten Chiffrierungsschlüssel im Encrypter (104) des ersten Clientgeräts (100, 300, 700);
e) Senden der ersten chiffrierten clientgerätspezifischen Information an die Speichervorrichtung vom Sender (101) des ersten Clientgeräts (100, 300, 700);
f) Empfangen der ersten chiffrierten clientgerätspezifischen Information durch den Empfänger (202) der Speichervorrichtung (200, 400, 800);
g) Speichern der ersten chiffrierten clientgerätspezifischen Information im Speicher (205) der Speichervorrichtung (200, 400, 800);
h) Senden einer zweiten speichervorrichtungsspezifischen Information, die für die Speichervorrichtung spezifisch ist, an ein zweites Clientgerät vom Sender (201) der Speichervorrichtung (200, 400, 800);
i) Empfangen der zweiten speichervorrichtungsspezifischen Information durch den Empfänger (102) des zweiten Clientgeräts (100, 300, 700);
j) Erzeugen eines zweiten Chiffrierungsschlüssels aus der zweiten speichervorrichtungsspezifischen Information und der zweiten Clientgerätschlüssel-Erzeugungsinformation im Schlüsselgenerator (103) des zweiten Clientgeräts (100, 300, 700);
k) Erzeugen einer zweiten chiffrierten clientgerätspezifischen Information durch Chiffrieren der zweiten clientgerätspezifischen Information die für das zweite Clientgerät spezifisch ist, mit dem zweiten Chiffrierungsschlüssel im Encrypter (104) des zweiten Clientgeräts (100, 300, 700);
l) Senden der zweiten chiffrierten clientgerätspezifischen Information an die Speichervorrichtung vom Sender (101) des zweiten Clientgeräts (100, 300, 700);
m) Empfangen der zweiten chiffrierten clientgerätspezifischen Information durch den Empfänger (202) der Speichervorrichtung (200); und
n) Beurteilen im Determinator (203) der Speichervorrichtung (200, 400, 800), ob notwendige Erfordernisse erfüllt sind oder nicht, einschließlich eines derartigen Zustands, dass die zweite chiffrierte clientgerätspezifische Information mit der im Speicher gespeicherten ersten chiffrierten clientgerätspezifischen Information übereinstimmt und, wenn die notwendigen Erfordernisse erfüllt sind, Identifizieren des zweiten Clientgeräts als das erste Clientgerät durch Überlegen, dass die erste speichervorrichtungsspezifische Information, die erste Clientgerätschlüssel-Erzeugungsinformation und die erste clientgerätspezifische Information mit der zweiten speichervorrichtungsspezifischen Information bzw. der zweiten Clientgerätschlüssel-Erzeugungsinformation bzw. der zweiten clientgerätspezifischen Information übereinstimmen.

2. Datenaufbewahrungsverfahren nach Anspruch 1, ferner mit den folgenden Schritten:
Erzeugen einer ersten chiffrierten Registrierungsinformation durch Chiffrieren der ersten Registrierungsinformation mit dem ersten Chiffrierungsschlüssel im Encrypter des ersten Clientgeräts;
Senden der ersten chiffrierten Registrierungsinformation an die Speichervorrichtung vom Sender des ersten Clientgeräts;
Empfangen der ersten chiffrierten Registrierungsinformation durch den Empfänger der Speichervorrichtung; und
Speichern der ersten chiffrierten Registrierungsinformation im Zusammenhang mit der ersten chiffrierten clientgerätspezifischen Information im Speicher der Speichervorrichtung;
wobei die erste Clientgerätschlüssel-Erzeugungsinformation geheime Information umfasst, die unabhängig im ersten Clientgerät spezifiziert ist; und
wobei die zweite Clientgerätschlüssel-Erzeugungsinformation geheime Information umfasst, die unabhängig im zweiten Clientgerät spezifiziert ist.

3. Datenaufbewahrungsverfahren nach Anspruch 2, wobei der Schritt j) den Schritt des Erzeugens eines Dechiffrierungsschlüssels, der dem zweiten Chiffrierungsschlüssel entspricht, aus der zweiten speichervorrichtungsspezifischen Information und der zweiten Clientgerätschlüssel-Erzeugungsinformation im Schlüsselgenerator des zweiten Clientgeräts umfasst;
wobei das Datenaufbewahrungsverfahren ferner folgende Schritte umfasst:
Senden der ersten chiffrierten Registrierungsinformation, die im Zusammenhang mit der ersten chiffrierten clientgerätspezifischen Information im Speicher gespeichert ist, vom Sender der Speichervorrichtung an das zweite Clientgerät, wenn das zweite Clientgerät im Schritt n) als das erste Clientgerät identifiziert wird;
Empfangen der ersten chiffrierten Registrierungsinformation durch den Empfänger des zweiten Clientgeräts; und
Dechiffrieren der ersten chiffrierten Registrierungsinformation unter Verwendung des Dechiffrierungsschlüssels im Decrypter (104) des zweiten Clientgeräts.

4. Datenaufbewahrungsverfahren nach Anspruch 3, ferner mit dem Schritt des Sendens einer zufälligen Zahl an das zweite Clientgerät vom Sender der Speichervorrichtung, wenn das zweite Clientgerät als Ergebnis der in Schritt n) vorgenommenen Beurteilung nicht als das erste Clientgerät identifiziert wird.

5. Datenaufbewahrungsverfahren nach Anspruch 2, wobei der Schritt j) den Schritt des Erzeugens eines Dechiffrierungsschlüssels, der dem zweiten Chiffrierungsschlüssel entspricht, aus der zweiten speichervorrichtungsspezifischen Information und der zweiten Clientgerätschlüssel-Erzeugungsinformation im Schlüsselgenerator des zweiten Clientgeräts umfasst;
der Schritt k) ferner den Schritt des Erzeugens einer zweiten chiffrierten Registrierungsinformation durch Chiffrieren einer zweiten Registrierungsinformation mit dem zweiten Chiffrierungsschlüssel im Encrypter des zweiten Clientgeräts umfasst;
der Schritt l) ferner den Schritt des Sendens der zweiten chiffrierten Registrierungsinformation an die Speichervorrichtung vom Sender des zweiten Clientgeräts umfasst; und
der Schritt m) ferner den Schritt des Empfangens der zweiten chiffrierten Registrierungsinformation durch den Empfänger der Speichervorrichtung umfasst;
wobei das Datenaufbewahrungsverfahren ferner den Schritt des Überschreibens der ersten chiffrierten Registrierungsinformation, die im Zusammenhang mit der ersten chiffrierten clientgerätspezifischen Information im Speicher gespeichert ist, mit der zweiten chiffrierten Registrierungsinformation in der Schreibvorrichtung der Speichervorrichtung umfasst, wenn das zweite Clientgerät im Schritt n) als das erste Clientgerät identifiziert wird.

6. Datenaufbewahrungsverfahren nach Anspruch 2, ferner mit dem Schritt des Erzeugens einer ersten Sequenzinformation, die eine chronologische Position identifiziert, an der die erste chiffrierte Registrierungsinformation in der Speichervorrichtung gespeichert ist, durch einen Sequenzinformationsgenerator (307) des ersten Clientgeräts (300);
wobei der Schritt d) ferner den Schritt des Erzeugens einer ersten chiffrierten Sequenzinformation durch Chiffrieren der ersten Sequenzinformation mit dem ersten Chiffrierungsschlüssel im Encrypter des ersten Clientgeräts (300) umfasst;
wobei der Schritt e) ferner den Schritt des Sendens der ersten Sequenzinformation und der ersten chiffrierten Sequenzinformation an die Speichervorrichtung vom Sender des ersten Clientgeräts (300) umfasst;
wobei der Schritt f) ferner den Schritt des Empfangens der ersten Sequenzinformation und der ersten chiffrierten Sequenzinformation durch den Empfänger der Speichervorrichtung (400) umfasst; und
wobei der Schritt g) ferner den Schritt des Speicherns der ersten Sequenzinformation und der ersten chiffrierten Sequenzinformation im Zusammenhang mit der ersten chiffrierten Registrierungsinformation im Speicher der Speichervorrichtung (400) umfasst;
wobei das Datenaufbewahrungsverfahren ferner den Schritt des Erzeugens einer zweiten Sequenzinformation im Sequenzinformationsgenerator des zweiten Clientgeräts (300) umfasst,
wobei der Schritt k) ferner die Schritte des Erzeugens einer zweiten chiffrierten Registrierungsinformation durch Chiffrieren der zweiten Registrierungsinformation mit dem zweiten Chiffrierungsschlüssel und des Erzeugens einer zweiten chiffrierten Sequenzinformation durch Chiffrieren der zweiten Sequenzinformation mit dem zweiten Chiffrierungsschlüssel im Encrypter des zweiten Clientgeräts (300) umfasst;
wobei der Schritt l) ferner den Schritt des Sendens der zweiten chiffrierten Registrierungsinformation, der zweiten Sequenzinformation und der zweiten chiffrierten Sequenzinformation an die Speichervorrichtung vom Sender des zweiten Clientgeräts (300) umfasst;
wobei der Schritt m) ferner den Schritt des Empfangens der zweiten chiffrierten Registrierungsinformation, der zweiten Sequenzinformation und der zweiten chiffrierten Sequenzinformation durch den Empfänger der Speichervorrichtung (400) umfasst;
wobei der Schritt n) ferner den Schritt des Beurteilens im Determinator (403) der Speichervorrichtung (400) umfasst, ob die erste Sequenzinformation, die im Zusammenhang mit der ersten chiffrierten clientgerätspezifischen Information im Speicher eine chronologisch frühere Position als die zweite Sequenzinformation angibt oder nicht;
wobei die notwendigen Erfordernisse ferner einen Zustand umfassen, in welchem die erste Sequenzinformation eine chronologisch frühere Position als die zweite Sequenzinformation angibt;
wobei das Datenaufbewahrungsverfahren ferner den Schritt des Überschreibens der ersten chiffrierten Registrierungsinformation, der ersten Sequenzinformation und der ersten chiffrierten Sequenzinformation, die im Zusammenhang mit der ersten chiffrierten clientgerätspezifischen Information im Speicher gespeichert sind, mit der zweiten chiffrierten Registrierungsinformation bzw. der zweiten Sequenzinformation bzw. der zweiten chiffrierten Sequenzinformation in der Schreibvorrichtung der Speichervorrichtung umfasst, wenn das zweite Clientgerät im Schritt n) als das erste Clientgerät identifiziert wird.

7. Datenaufbewahrungsverfahren nach Anspruch 6, wobei die Schritte h) bis n) nach dem Schritt des Überschreibens der ersten chiffrierten Registrierungsinformation, der ersten Sequenzinformation und der ersten chiffrierten Sequenzinformation mit der zweiten chiffrierten Registrierungsinformation bzw. der zweiten Sequenzinformation bzw. der zweiten chiffrierten Sequenzinformation erneut ausgeführt werden; und
der erneut ausgeführte Schritt j) den Schritt des Erzeugens eines Dechiffrierungsschlüssels, der dem zweiten Chiffrierungsschlüssel entspricht, aus der zweiten speichervorrichtungsspezifischen Information und der zweiten Clientgerätschlüssel-Erzeugungsinformation im Schlüsselgenerator des zweiten Clientgeräts umfasst;
wobei das Datenaufbewahrungsverfahren ferner die folgenden Schritte umfasst:
Senden der zweiten chiffrierten Registrierungsinformation, der zweiten Sequenzinformation und der zweiten chiffrierten Sequenzinformation, die im Speicher im Zusammenhang mit der ersten chiffrierten clientgerätspezifischen Information gespeichert ist, vom Sender der Speichervorrichtung an das zweite Clientgerät, wenn das zweite Clientgerät im erneut ausgeführten Schritt n) als das erste Clientgerät identifiziert wird;
Empfangen der zweiten chiffrierten Registrierungsinformation, der zweiten Sequenzinformation und der zweiten chiffrierten Sequenzinformation durch den Empfänger des zweiten Clientgeräts;
Dechiffrieren der zweiten chiffrierten Sequenzinformation mit dem Dechiffrierungsschlüssel im Decrypter des zweiten Clientgeräts; und
Beurteilen im Determinator des zweiten Clientgeräts, ob eine Information, die durch Dechiffrieren der zweiten chiffrierten Sequenzinformation erhalten wird, mit der zweiten Sequenzinformation, die durch den Empfänger des zweiten Clientgeräts empfangen wird, übereinstimmt oder nicht, und wenn sie übereinstimmen, Entscheiden, dass die zweite chiffrierte Registrierungsinformation richtig ist.

8. Datenaufbewahrungsverfahren nach Anspruch 1, ferner mit dem Schritt des Erzeugens einer ersten Sequenzinformation, die eine chronologische Position identifiziert, an der eine erste Registrierungsinformation in der Speichervorrichtung gespeichert ist, im Sequenzinformationsgenerator (307) des ersten Clientgeräts (700);
wobei der Schritt d) ferner den Schritt des Erzeugens einer ersten chiffrierten Sequenzinformation durch Chiffrieren der ersten Sequenzinformation mit dem ersten Chiffrierungsschlüssel im Encrypter des ersten Clientgeräts (700) umfasst;
wobei der Schritt e) ferner den Schritt des Sendens der ersten Registrierungsinformation, der ersten Sequenzinformation und der ersten chiffrierten Sequenzinformation an die Speichervorrichtung vom Sender des ersten Clientgeräts (700) umfasst;
wobei der Schritt f) ferner den Schritt des Empfangens der ersten Registrierungsinformation, der ersten Sequenzinformation und der ersten chiffrierten Sequenzinformation durch den Empfänger der Speichervorrichtung (800) umfasst; und
wobei der Schritt g) ferner den Schritt des Speicherns der ersten Registrierungsinformation, der ersten Sequenzinformation und der ersten chiffrierten Sequenzinformation im Zusammenhang mit der ersten chiffrierten clientgerätspezifischen Information im Speicher der Speichervorrichtung (800) umfasst;
wobei das Datenaufbewahrungsverfahren ferner den Schritt des Erzeugens einer zweiten Sequenzinformation im Sequenzinformationsgenerator des zweiten Clientgeräts (700) umfasst;
wobei der Schritt k) ferner den Schritt des Erzeugens einer zweiten chiffrierten Sequenzinformation durch Chiffrieren der zweiten Sequenzinformation unter Verwendung des zweiten Chiffrierungsschlüssels im Encrypter des zweiten Clientgeräts (700) u mfasst;
wobei der Schritt l) ferner den Schritt des Sendens der zweiten Registrierungsinformation, der zweiten Sequenzinformation und der zweiten chiffrierten Sequenzinformation an die Speichervorrichtung vom Sender des zweiten Clientgeräts (700) umfasst;
wobei der Schritt m) ferner den Schritt des Empfangens der zweiten Registrierungsinformation, der zweiten Sequenzinformation und der zweiten chiffrierten Sequenzinformation durch den Empfänger der Speichervorrichtung umfasst;
wobei der Schritt n) ferner den Schritt des Beurteilens im Determinator der Speichervorrichtung umfasst, ob die erste Sequenzinformation, die im Zusammenhang mit der ersten chiffrierten clientgerätspezifischen Information im Speicher gespeichert ist, eine chronologisch frühere Position als die zweite Sequenzinformation angibt oder nicht;
wobei die notwendigen Erfordernisse ferner einen Zustand umfassen, in welchem die erste Sequenzinformation eine chronologisch frühere Position als die zweite Sequenzinformation angibt;
wobei das Datenaufbewahrungsverfahren ferner den Schritt des Überschreibens der ersten Registrierungsinformation, der ersten Sequenzinformation und der ersten chiffrierten Sequenzinformation, die im Zusammenhang mit der ersten chiffrierten clientgerätspezifischen Information im Speicher gespeichert sind, mit der zweiten Registrierungsinformation bzw. der zweiten Sequenzinformation bzw. der zweiten chiffrierten Sequenzinformation in der Schreibvorrichtung der Speichervorrichtung umfasst, wenn das zweite Clientgerät im Schritt n) als das erste Clientgerät identifiziert wird;
wobei die erste Clientgerätschlüssel-Erzeugungsinformation geheime Information umfasst, die unabhängig im ersten Clientgerät spezifiziert ist; und
wobei die zweite Clientgefätschlüssel-Erzeugüngsinformation geheime Information umfasst, die unabhängig im zweiten Clientgerät spezifiziert ist.

9. Datenaufbewahrungsverfahren nach Anspruch 8, wobei die Schritte h) bis n) nach dem Schritt des Überschreibens der ersten Registrierungsinformation, der ersten Sequenzinformation und der ersten chiffrierten Sequenzinformation mit der zweiten chiffrierten Registrierungsinformation bzw. der zweiten Sequenzinformation bzw. der zweiten chiffrierten Sequenzinformation erneut ausgeführt werden;
der erneut ausgeführte Schritt j) den Schritt des Erzeugens eines Dechiffrierungsschlüssels, der dem zweiten Chiffrierungsschlüssel entspricht, aus der zweiten speichervorrichtungsspezifischen Information und der zweiten Clientgerätschlüssel-Erzeugungsinformation im Schlüsselgenerator des zweiten Clientgeräts umfasst;
wobei das Datenaufbewahrungsverfahren ferner die folgenden Schritte umfasst:
Senden der zweiten chiffrierten Registrierungsinformation, der zweiten Sequenzinformation und der zweiten chiffrierten Sequenzinformation, die im Zusammenhang mit der ersten chiffrierten clientgerätspezifischen Information im Speicher gespeichert sind, vom Sender der Speichervorrichtung an das zweite Clientgerät, wenn das zweite Clientgerät im erneut ausgeführten Schritt n) als das erste Clientgerät identifiziert wird;
Empfangen der zweiten chiffrierten Registrierungsinformation, der zweiten Sequenzinformation und der zweiten chiffrierten Sequenzinformation durch den Empfänger des zweiten Clientgeräts;
Dechiffrieren der zweiten chiffrierten Sequenzinformation mit dem Dechiffrierungsschlüssel im Decrypter des zweiten Clientgeräts; und
Beurteilen im Determinator des zweiten Clientgeräts, ob eine Information, die durch Dechiffrieren der zweiten chiffrierten Sequenzinformation erhalten wird, mit der zweiten Sequenzinformation, die durch den Empfänger des zweiten Clientgeräts empfangen wird, übereinstimmt oder nicht, und wenn sie übereinstimmen, Entscheiden, dass die zweite chiffrierte Registrierungsinformation richtig ist.

10. Datenaufbewahrungsverfahren nach Anspruch 1, ferner mit den folgenden Schritten:
Senden einer dritten Clientgerätschlüssel-Erzeugungsinformation, die eine geheime Information ist, die unabhängig im ersten Clientgerät spezifiziert ist, an die Speichervorrichtung vom Sender des ersten Clientgeräts;
Empfangen der dritten Clientgerätschlüssel-Erzeugungsinformation durch den Empfänger der Speichervorrichtung;
Erzeugen einer dritten chiffrierten Clientgerätschlüssel-Erzeugungsinformation durch Chiffrieren der dritten Clientgerätschlüssel-Erzeugungsinformation mit einem dritten Chiffrierungsschlüssel im Encrypter der Speichervorrichtung;
Senden einer vierten Clientgerätschlüssel-Erzeugungsinformation, die eine geheime Information ist, die unabhängig im zweiten Clientgerät spezifiziert ist, an die Speichervorrichtung vom Sender des zweiten Clientgeräts;
Empfangen der vierten Clientgerätschlüssel-Erzeugungsinformation durch den Empfänger der Speichervorrichtung; und
Erzeugen einer vierten chiffrierten Clientgerätschlüssel-Erzeugungsinformation durch Chiffrieren der vierten Clientgerätschlüssel-Erzeugungsinformation mit einem vierten Chiffrierungsschlüssel im Encrypter der Speichervorrichtung;
wobei der Schritt a) den Schritt des Sendens der dritten chiffrierten Clientgerätschlüssel-Erzeugungsinformation als die erste speichervorrichtungsspezifische Information umfasst; und
der Schritt h) den Schritt des Sendens der vierten chiffrierten Clientgerätschlüssel-Erzeugungsinformation als die zweite speichervorrichtungsspezifische Information umfasst.

11. Datenaufbewahrungsverfahren nach Anspruch 1, wobei der Schritt e) ferner den Schritt des Sendens einer ersten Clientgerät-Identifizierungsinformation, die für das erste Clientgerät spezifisch ist, an die Speichervorrichtung vom Sender des ersten Clientgeräts umfasst;
wobei der Schritt f) ferner den Schritt des Empfangens der ersten Clientgerät-Identifizierungsinformation durch den Empfänger der Speichervorrichtung umfasst;
wobei der Schritt g) ferner den Schritt des Speicherns der ersten Clientgerät-Identifizierungsinformation im Speicher im Zusammenhang mit der ersten chiffrierten clientgerätspezifischen Information umfasst;
wobei der Schritt l) ferner den Schritt des Sendens einer zweiten Clientgerät-Identifizierungsinformation, die für das zweite Clientgerät spezifische ist, an die Speichervorrichtung vom Sender des zweiten Clientgeräts umfasst;
wobei der Schritt m) ferner den Schritt des Empfangens der zweiten Clientgerät-Identifizierungsinformation durch den Empfänger der Speichervorrichtung umfasst, und
wobei der Schritt n) ferner den Schritt des Beurteilens, ob die erste Clientgerät-Identifizierungsinformation, die im Zusammenhang mit der ersten chiffrierten clientgerätspezifischen Information im Speicher gespeichert ist, mit der zweiten clientgerät-Identifizierungsinformation übereinstimmt oder nicht, im Determinator der Speichervorrichtung umfasst;
wobei die notwendigen Erfordernisse ferner einen Zustand umfassen, in welchem die erste Clientgerät-Identifizierungsinformation mit der zweiten Clientgerät-Identifizierungsinformation übereinstimmt.

12. Datenaufbewahrungssystem mit einer Einrichtung, die dazu ausgelegt ist, alle Schritte des Verfahrens nach irgendeinem der Ansprüche 1 bis 11 durchzuführen.

13. Computerprogrammprodukt mit einer Computerprogrammcodeeinrichtung, die dazu ausgelegt ist, alle Schritte des Verfahrens nach irgendeinem der Ansprüche 1 bis 11 durchzuführen.

## Revendications

1. Procédé de conservation de données comprenant les étapes consistant à :
a) envoyer des premières informations spécifiques de dispositif de stockage, qui sont spécifiques d'un dispositif de stockage, à un premier appareil client, par un émetteur (201) du dispositif de stockage (200, 400, 800) ;
b) faire en sorte que le récepteur (102) du premier appareil client (100, 300, 700) reçoive des premières informations spécifiques du dispositif de stockage ;
c) générer une première clé de cryptage à partir des premières informations spécifiques du dispositif de stockage et de premières informations de génération de clé d'appareil client, dans un générateur de clé (103) du premier appareil client (100, 300, 700) ;
d) générer des premières informations cryptées spécifiques de l'appareil client par cryptage de premières informations spécifiques d'appareil client, qui sont spécifiques du premier appareil client, avec la première clé de cryptage, dans un dispositif de cryptage (104) du premier appareil client (100, 300, 700) ;
e) envoyer les premières informations cryptées spécifiques de l'appareil client au dispositif de stockage, depuis l'émetteur (101) du premier appareil client (100, 300, 700) ;
f) faire en sorte que le récepteur (202) du dispositif (200, 400, 800) reçoive les premières informations cryptées spécifiques de l'appareil client ;
g) stocker les premières informations cryptées spécifiques de l'appareil client dans une mémoire (205) du dispositif de stockage (200, 400, 800) ;
h) envoyer des deuxièmes informations spécifiques de dispositif de stockage, qui sont spécifiques du dispositif de stockage, à un deuxième appareil client, depuis l'émetteur (201) du dispositif de stockage (200, 400, 800) ;
i) faire en sorte que le récepteur (102) du deuxième appareil client (100, 300, 700) reçoive les deuxièmes informations spécifiques du dispositif de stockage ;
j) générer une deuxième clé de cryptage à partir des deuxièmes informations spécifiques du dispositif de stockage et des deuxièmes informations de génération de clé d'appareil client, dans le générateur de clé (103) du deuxième appareil client (100, 300, 700) ;
k) générer des deuxièmes informations cryptées spécifiques de l'appareil client par cryptage de deuxièmes informations spécifiques d'appareil client qui sont spécifiques du deuxième appareil client, avec la deuxième clé de cryptage, dans le dispositif de cryptage (104) du deuxième appareil client (100, 300, 700) ;
l) envoyer les deuxièmes informations cryptées spécifiques de l'appareil client au dispositif de stockage, depuis l'émetteur (101) du deuxième appareil client (100, 300, 700) ;
m) faire en sorte que le récepteur (202) du dispositif de stockage (200) reçoive les deuxièmes informations cryptées spécifiques de l'appareil client ; et
n) juger, dans un dispositif de détermination (203) du dispositif de stockage (200, 400, 800) si oui ou non des exigences nécessaires sont satisfaites, parmi lesquelles une condition selon laquelle les deuxièmes informations cryptées spécifiques de l'appareil client concordent avec les premières informatiques cryptées spécifiques de l'appareil client stockées dans la mémoire et, lorsque les exigences nécessaires sont satisfaites, identifier le deuxième appareil client comme étant le premier appareil client en considérant que les premières informations spécifiques du dispositif de stockage, les premières informations de génération de clé d'appareil client et les premières informations spécifiques de l'appareil client concordent respectivement avec les deuxièmes informations spécifiques du dispositif de stockage, avec les deuxièmes informations de génération de clé d'appareil client et avec les deuxièmes informations spécifiques de l'appareil client.

2. Procédé de conservation de données selon la revendication 1, comprenant en outre les étapes consistant à :
générer des premières informations d'enregistrement cryptées, en cryptant des premières informations d'enregistrement avec la première clé de cryptage, dans le dispositif de cryptage du premier appareil client ;
envoyer les premières informations d'enregistrement cryptées au dispositif de stockage, depuis l'émetteur du premier appareil client ;
faire en sorte que le récepteur du dispositif de stockage reçoive les premières informations d'enregistrement cryptées ; et
stocker les premières informations d'enregistrement cryptées en association avec les premières informations cryptées spécifiques de l'appareil client, dans la mémoire du dispositif de stockage ;
les premières informations de génération de clé d'appareil client comprenant des informations secrètes spécifiées indépendamment dans le premier appareil client ; et
les deuxièmes informations de génération de clé d'appareil client comprenant des informations secrètes spécifiées indépendamment du deuxième appareil client.

3. Procédé de conservation de données selon la revendication 2, dans lequel l'étape j) comprend l'étape consistant à générer une clé de cryptage correspondant à la deuxième clé de cryptage à partir des deuxièmes informations spécifiques du dispositif de stockage et des deuxièmes informations de génération de clé d'appareil client, dans le générateur de clé du deuxième appareil client ;
le procédé de conservation de données comprenant en outre les étapes consistant à :
envoyer les premières informations d'enregistrement cryptées stockées en association avec les premières informations cryptées spécifiques de l'appareil client dans la mémoire, depuis l'émetteur du dispositif de stockage au deuxième appareil client, lorsque le deuxième appareil client est identifié comme étant le premier appareil client à l'étape n) ;
faire en sorte que le récepteur du deuxième appareil client reçoive des premières informations d'enregistrement cryptées ; et
décrypter les premières informations d'enregistrement cryptées en utilisant la clé de décryptage, dans le dispositif de décryptage (104) du deuxième appareil client.

4. Procédé de conservation de données selon la revendication 3, comprenant en outre l'étape consistant à envoyer un nombre aléatoire au deuxième appareil client depuis l'émetteur du dispositif de stockage lorsque le deuxième appareil client n'est pas identifié comme étant le premier appareil client suite à l'évaluation effectuée à l'étape n).

5. Procédé de conservation de données selon la revendication 2, dans lequel l'étape j) comprend l'étape consistant à générer une clé de décryptage correspondant à la deuxième clé de cryptage à partir des deuxièmes informations spécifiques du dispositif de stockage et des deuxièmes informations de génération de clé d'appareil client, dans le générateur de clé du deuxième appareil client ;
l'étape k) comprend en outre l'étape consistant à générer des deuxièmes informations d'enregistrement cryptées en cryptant des deuxièmes informations d'enregistrement avec la deuxième clé de cryptage dans le dispositif de cryptage du deuxième appareil client ;
l'étape 1) comprend en outre l'étape consistant à envoyer les deuxièmes informations d'enregistrement cryptées au dispositif de stockage, depuis l'émetteur du deuxième appareil client ; et
l'étape m) comprend en outre l'étape consistant à faire en sorte que le récepteur du dispositif de stockage reçoive les deuxièmes informations d'enregistrement cryptées ;
le procédé de conservation de données comprenant en outre l'étape consistant à remplacer les premières informations d'enregistrement cryptées stockées en association avec les premières informations cryptées spécifiques de l'appareil client dans la mémoire, par les deuxièmes informations d'enregistrement cryptées, dans un dispositif d'écriture du dispositif.de stockage, lorsque le deuxième appareil client est identifié comme étant le premier appareil client à l'étape n).

6. Procédé de conservation de données selon la revendication 2, comprenant en outre l'étape consistant à générer des premières informations de séquence identifiant une position chronologique à laquelle les premières informations d'enregistrement cryptées sont stockées dans le dispositif de stockage, au moyen du générateur d'informations de séquence (307) du premier appareil client (300) ;
l'étape d) comprend en outre l'étape consistant à générer des premières informations de séquence cryptées en cryptant les premières informations de séquence avec la première clé de cryptage, dans le dispositif de cryptage du premier appareil client (300) ;
l'étape e) comprend en outre l'étape consistant à envoyer les premières informations de séquence et les premières informations de séquence cryptées au dispositif de stockage depuis l'émetteur du premier appareil client (300) ;
l'étape f) comprend en outre l'étape consistant à faire en sorte que le récepteur du dispositif de stockage (400) reçoive les premières informations de séquence et les premières informations de séquence cryptées ; et
l'étape g) comprend en outre l'étape consistant à stocker les premières informations de séquence et les premières informations de séquence cryptées en association avec les premières informations d'enregistrement cryptées dans la mémoire du dispositif de stockage (400) ;
le procédé de conservation de données comprenant en outre l'étape consistant à générer des deuxièmes informations de séquence dans le générateur d'informations de séquence du deuxième appareil client (300),
l'étape k) comprenant en outre les étapes consistant à générer des deuxièmes informations d'enregistrement cryptées en cryptant des deuxièmes informations d'enregistrement avec la deuxième clé de cryptage, et à générer des deuxièmes informations de séquence cryptées en cryptant les deuxièmes informations de séquence avec la deuxième clé de cryptage dans le dispositif de cryptage du deuxième appareil client (300) ;
l'étape 1) comprenant en outre l'étape consistant à envoyer les deuxièmes informations d'enregistrement cryptées, les deuxièmes informations de séquence et les deuxièmes informations de séquence cryptées au dispositif de stockage depuis l'émetteur du deuxième appareil client (300) ;
l'étape m) comprenant en outre l'étape consistant à faire en sorte que le récepteur du dispositif de stockage (400) reçoive les deuxièmes informations d'enregistrement cryptées, les deuxièmes informations de séquence et les deuxièmes informations de séquence cryptées ; et
l'étape n) comprenant en outre l'étape consistant à juger, dans le dispositif de détermination (403) du dispositif de stockage (400), si oui ou non les premières informations de séquence stockées en association avec les premières informations cryptées spécifiques de l'appareil client dans la mémoire indiquent une position chronologiquement antérieure aux deuxièmes informations de séquence ;
les exigences nécessaires comprenant en outre une condition selon laquelle les premières informations de séquence indiquent une position chronologiquement antérieure aux deuxièmes informations de séquence ;
le procédé de conservation de données comprenant en outre l'étape consistant à remplacer respectivement les premières informations d'enregistrement cryptées, les premières informations de séquence et les premières informations de séquence cryptées stockées en association avec les premières informations cryptées spécifiques de l'appareil client dans la mémoire, par les deuxièmes informations d'enregistrement cryptées, les deuxièmes informations de séquence et les deuxièmes informations de séquence cryptées, dans le dispositif d'écriture du dispositif de stockage lorsque le deuxième appareil client est identifié comme étant le premier appareil client à l'étape n).

7. Procédé de conservation de données selon la revendication 6, dans lequel les étapes h) à n) sont de nouveau exécutées après l'étape consistant à remplacer respectivement les premières informations d'enregistrement cryptées, les premières informations de séquence et les premières informations de séquence cryptées par les deuxièmes informations d'enregistrement cryptées, les deuxièmes informations de séquence et les deuxièmes informations de séquence cryptées ; et
l'étape j) exécutée de nouveau comprend l'étape consistant à générer une clé de décryptage correspondant à la deuxième clé de cryptage, à partir des deuxièmes informations spécifiques du dispositif de stockage et des deuxièmes informations de génération de clé d'appareil client dans le générateur de clé du deuxième appareil client ;
le procédé de conservation de données comprenant en outre les étapes consistant à :
envoyer les deuxièmes informations d'enregistrement cryptées, les deuxièmes informations de séquence et les deuxièmes informations de séquence cryptées stockées dans la mémoire en association avec les premières informations cryptées spécifiques de l'appareil client, depuis l'émetteur du dispositif de stockage au deuxième appareil client lorsque le deuxième appareil client est identifié comme étant le premier appareil client à l'étape n) exécutée de nouveau ;
faire en sorte que le récepteur du deuxième appareil client reçoive les deuxièmes informations d'enregistrement cryptées, les deuxièmes informations de séquence et les deuxièmes informations de séquence cryptées ;
décrypter les deuxièmes informations de séquence cryptées avec la clé de décryptage dans le dispositif de décryptage du deuxième appareil client ;
et juger, dans le dispositif de détermination du deuxième appareil client, si oui ou non des informations obtenues en décryptant les deuxièmes informations de de séquence cryptées concordent avec les deuxièmes informations de séquence reçues par le récepteur du deuxième appareil client et, lorsqu'elles concordent, décider du fait que les deuxièmes informations d'enregistrement cryptées sont correctes.

8. Procédé de conservation de données selon la revendication 1, comprenant en outre l'étape consistant à générer des premières informations de séquence dans le dispositif de stockage, dans un générateur d'informations de séquence (307) du premier appareil client (700) ;
l'étape d) comprenant en outre l'étape consistant à générer des premières informations de séquence cryptées en cryptant les premières informations de séquence avec la première clé de cryptage, dans le dispositif de cryptage du premier appareil client (700) ;
l'étape e) comprenant en outre l'étape consistant à envoyer les premières informations d'enregistrement, les premières informations de séquence et les premières informations de séquence cryptées au dispositif de stockage, depuis l'émetteur du premier appareil client (700) ;
l'étape f) comprenant en outre l'étape consistant à faire en sorte que le récepteur du dispositif de stockage (800) reçoive les premières informations d'enregistrement, les premières informations de séquence et les premières informations de séquence cryptées ; et
l'étape g) comprenant en outre l'étape consistant à stocker les premières informations d'enregistrement, les premières informations de séquence et les premières informations de séquence cryptées, en association avec les premières informations cryptées spécifiques de l'appareil client, dans la mémoire du dispositif de stockage (800) ;
le procédé de conservation de données comprenant en outre l'étape consistant à générer des deuxièmes informations de séquence dans le générateur d'informations de séquence du deuxième appareil client (700),
l'étape k) comprenant en outre l'étape consistant à générer des deuxièmes informations de séquence cryptées en cryptant les deuxièmes informations de séquence, en utilisant la deuxième clé de cryptage, dans le crypteur du deuxième appareil client (700) ;
l'étape 1) comprenant en outre l'étape consistant à envoyer des deuxièmes informations d'enregistrement, les deuxièmes informations de séquence et les deuxièmes informations de séquence cryptées au dispositif de stockage depuis l'émetteur du deuxième appareil client (700) ;
l'étape m) comprenant en outre l'étape consistant à faire en sorte que le récepteur du dispositif de stockage reçoive les deuxièmes informations d'enregistrement, les deuxièmes informations de séquence et les deuxièmes informations de séquence cryptées ;
l'étape n) comprenant en outre l'étape consistant à juger, dans le dispositif de détermination du dispositif de stockage, si oui ou non les premières informations de séquence stockées en association avec les premières informations cryptées spécifiques de l'appareil client dans la mémoire indiquent une position chronologiquement antérieure aux deuxièmes informations de séquence ;
les exigences nécessaires comprenant en outre une condition selon laquelle les premières informations de séquence indiquent une position chronologiquement antérieure aux deuxièmes informations de séquence ;
le procédé de conservation de données comprenant en outre l'étape consistant à remplacer respectivement les premières informations d'enregistrement, les premières informations de séquence et les premières informations de séquence cryptées stockées en association avec les premières informations cryptées spécifiques de l'appareil client dans la mémoire, par les deuxièmes informations d'enregistrement, les deuxièmes informations de séquence et les deuxièmes informations de séquence cryptées, dans le dispositif d'écriture du dispositif de stockage, lorsque le deuxième appareil client est identifié comme étant le premier appareil client à l'étape n) ;
les premières informations de génération de clé d'appareil client comprenant des informations secrètes spécifiées indépendamment dans le premier appareil client ; et
les deuxièmes informations de génération de clé d'appareil client comprenant des informations secrètes spécifiées indépendamment dans le deuxième appareil client.

9. Procédé de conservation de données selon la revendication 8, dans lequel les étapes h) à n) sont de nouveau exécutées après l'étape consistant à remplacer respectivement des premières informations d'enregistrement, les premières informations de séquence et les premières informations de séquence cryptées par les deuxièmes informations d'enregistrement, les deuxièmes informations de séquence et les deuxièmes informations de séquence cryptées ;
l'étape j) exécutée de nouveau comprenant l'étape consistant à générer une clé de décryptage correspondant à la deuxième clé de cryptage, à partir des deuxièmes informations spécifiques du dispositif de stockage et des deuxièmes informations de génération de clé d'appareil client, dans le générateur de clé du deuxième appareil client ;
le procédé de conservation de données comprenant en outre les étapes consistant à :
envoyer les deuxièmes informations d'enregistrement, les deuxièmes informations de séquence et les deuxièmes informations de séquence cryptées stockées en association avec les premières informations cryptées spécifiques de l'appareil client dans la mémoire, depuis l'émetteur du dispositif de stockage au deuxième appareil client, lorsque le deuxième appareil client est identifié comme étant le premier appareil client à l'étape n) exécutée de nouveau ;
faire en sorte que le récepteur du deuxième appareil client reçoive les deuxièmes informations d'enregistrement, les deuxièmes informations de séquence et les deuxièmes informations de séquence cryptées ; et
décrypter les deuxièmes informations de séquence cryptées avec la clé de décryptage, dans le dispositif de décryptage du deuxième appareil client ;
juger, dans le dispositif de détermination du deuxième appareil client, si oui ou non des informations obtenues en décryptant les deuxièmes informations de séquence cryptées concordent avec les deuxièmes informations de séquence reçues par le récepteur du deuxième appareil client et, lorsqu'elles concordent, décider du fait que les deuxièmes informations d'enregistrement sont correctes.

10. Procédé de conservation de données selon la revendication 1, comprenant en outre les étapes consistant à :
envoyer des troisièmes informations de génération de clé d'appareil client, qui sont des informations secrètes spécifiées indépendamment dans le premier appareil client, au dispositif de stockage, depuis l'émetteur du premier appareil client ;
faire en sorte que le récepteur du dispositif de stockage reçoive les troisièmes informations de génération de clé d'appareil client ;
générer des troisièmes informations cryptées de génération de clé d'appareil client en cryptant les troisièmes informations de génération de clé d'appareil client avec une troisième clé de cryptage, dans le dispositif de cryptage du dispositif de stockage ;
envoyer des quatrièmes informations de génération de clé d'appareil client, qui sont des informations secrètes spécifiées indépendamment dans le deuxième appareil client, au dispositif de stockage, depuis l'émetteur du deuxième appareil client ;
faire en sorte que le récepteur du dispositif de stockage reçoive les quatrièmes informations de génération de clé d'appareil client ; et
générer des quatrièmes informations de génération de clé d'appareil client en cryptant les quatrièmes informations de génération de clé d'appareil client avec une quatrième clé de cryptage, dans le dispositif de cryptage du dispositif de stockage ;
l'étape a) comprenant l'étape consistant à envoyer les troisièmes informations cryptées de génération de clé d'appareil client en tant que premières informations spécifiques du dispositif de stockage ; et
l'étape h) comprenant l'étape consistant à envoyer les quatrièmes informations cryptées de génération de clé d'appareil client en tant que deuxièmes informations spécifiques du dispositif de stockage.

11. Procédé de conservation de données selon la revendication 1, dans lequel l'étape e) comprend en outre l'étape consistant à envoyer des premières informations d'identification d'appareil client spécifiques du premier appareil client au dispositif de stockage, depuis l'émetteur du premier appareil client ;
l'étape f) comprend en outre l'étape consistant à faire en sorte que le récepteur du dispositif de stockage reçoive les premières informations d'identification d'appareil client ;
l'étape g) comprend en outre l'étape consistant à stocker en mémoire les premières informations d'identification d'appareil client, en association avec les premières informations cryptées spécifiques de l'appareil client ;
l'étape 1) comprend en outre l'étape consistant à envoyer des deuxièmes informations d'identification d'appareil client spécifiques du deuxième appareil client, au dispositif de stockage, depuis l'émetteur du deuxième appareil client,
l'étape m) comprend en outre l'étape consistant à faire en sorte que le récepteur du dispositif de stockage reçoive les deuxièmes informations d'identification d'appareil client ; et
l'étape n) comprend en outre l'étape consistant à juger si oui ou non les premières informations d'identification d'appareil client stockées en mémoire en association avec les premières informations cryptées spécifiques de l'appareil client concordent avec les deuxièmes informations d'identification d'appareil client, dans le dispositif de détermination du dispositif de stockage ;
les exigences nécessaires comprenant en outre une condition selon laquelle les premières informations d'identification d'appareil client concordent avec les deuxièmes informations d'identification d'appareil client.

12. Système de conservation de données comprenant un moyen conçu pour mettre en oeuvre toutes les étapes du procédé selon l'une quelconque des revendications 1 à 11.

13. Produit de programme informatique comprenant un moyen à code de programme informatique conçu pour mettre en oeuvre toutes les étapes du procédé selon l'une quelconque des revendications 1 à 11.
